(19) Europäisches Patentamt
European Patent Office
Office européen des brevets

(11) **EP 4 182 762 B1**

(12) **EUROPÄISCHE PATENTSCHRIFT**

(45) Veröffentlichungstag und Bekanntmachung des Hinweises auf die Patenterteilung:
**28.05.2025 Patentblatt 2025/22**

(21) Anmeldenummer: **21745243.2**

(22) Anmeldetag: **28.06.2021**

(51) Internationale Patentklassifikation (IPC):
**G05B 19/042** (2006.01)     **F15B 19/00** (2006.01)
**F16K 37/00** (2006.01)     **G05B 23/02** (2006.01)

(52) Gemeinsame Patentklassifikation (CPC):
**G05B 23/0243; G05B 19/042;** G05B 2219/25312;
G05B 2219/33326

(86) Internationale Anmeldenummer:
**PCT/EP2021/067683**

(87) Internationale Veröffentlichungsnummer:
**WO 2022/012909 (20.01.2022 Gazette 2022/03)**

(54) **STELLUNGSREGLER FÜR EINE PROZESSTECHNISCHE ANLAGE MIT VENTILSTELLGERÄT UND ENTSPRECHENDES DIAGNOSEVERFAHREN**

VALVE CONTROL DEVICE FOR A PROCESS ENGINEERING PLANT AND CORRESPONDING DIAGNOSTIC METHOD

DISPOSITIF DE COMMANDE DE SOUPAPEPOUR UNE INSTALLATION DE TRAITEMENT ET PROCÉDÉ DE DIAGNOSTIC CORRESPONDANT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **14.07.2020 DE 102020118556**

(43) Veröffentlichungstag der Anmeldung:
**24.05.2023 Patentblatt 2023/21**

(73) Patentinhaber: **Samson Aktiengesellschaft 60314 Frankfurt am Main (DE)**

(72) Erfinder: **FIEBIGER, Christian 65719 Hofheim am Taunus (DE)**

(74) Vertreter: **Schmid, Nils T.F. SKM-IP PartGmbB Oberanger 45 80331 München (DE)**

(56) Entgegenhaltungen:
**EP-A2- 1 599 712     WO-A1-2015/012832 WO-A1-2020/049214**

EP 4 182 762 B1

**Beschreibung**

Die Offenbarung betrifft ein Ventilstellgerät für eine prozesstechnische Anlage, wie eine Chemieanlage, beispielsweise eine petrochemische Anlage, ein Kraftwerk, beispielsweise ein Atomkraftwerk, eine Lebensmittel verarbeitende Anlage, beispielsweise eine Brauerei, oder dergleichen. Die Offenbarung kann unter anderem eine prozesstechnische Anlage mit einem Ventilstellgerät betreffen. Ferner betrifft die Offenbarung die Verwendung eines Ventilstellgeräts zur Durchführung eines Diagnoseverfahrens bezüglich einer prozesstechnischen Anlage.

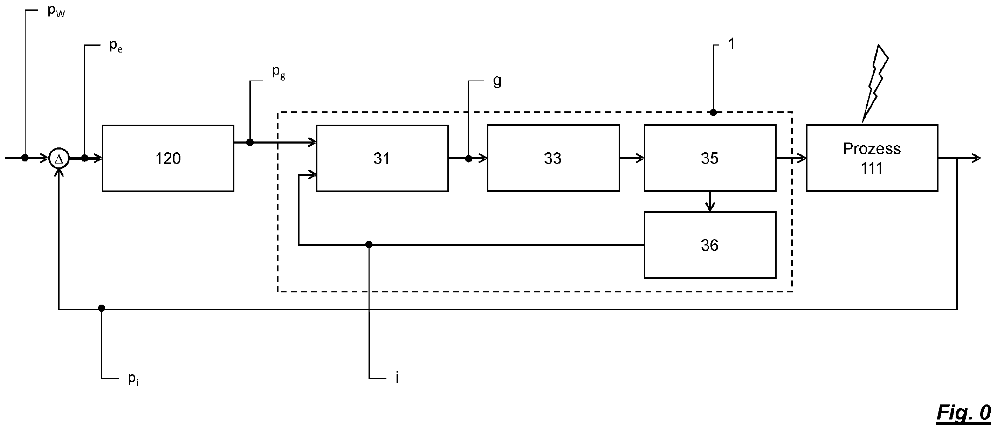

Ventilstellgeräte werden häufig in prozesstechnischen Anlagen innerhalb einer kaskadierten Prozessregelung eingesetzt, wie sie beispielsweise in Fig. 0 schematisch dargestellt ist. Bei einer kaskadierten Prozessregelung oder Kaskadenregelung werden mehrere Regler kaskadiert, die zugehörigen Regelkreise sind ineinander geschachtelt. Dabei ist einem Stellgerät (1) wenigstens ein anderer Prozessregler (120) übergeordnet. Die Ausgangsgröße ($p_g$) des Prozessreglers (120) dient als Führungsgröße für das Ventilstellgerät.

Typische Anwendungen in der Prozessregelung nutzen Ventilstellgeräte mit Stellventil, um über Änderungen in den durchtretenden Volumen- oder Massenströmen einen nachgelagerten Prozess auf ein vorgegebenes stationäres oder dynamisches Ziel hin zu beeinflussen. Zur Prozessregelung eingesetzte Prozessregler steuern die mechanische Stellung des Stellventils nicht direkt. Dies wird in einer untergeordneten, d.h. kaskadierten Reglerschleife mithilfe einer Regelungselektronik des Ventilstellgeräts ausgeführt.

In der in Figur 0 beispielhaft dargestellten Reglerkaskade wird in der übergeordneten, bildlich äußeren Regelschleife dem Prozessregler (120) die als Differenz aus einem Prozess-Soll-Signal ($p_g$) und einem Prozess-Ist-Signal ($p_i$) gebildete Prozess-Regeldifferenz ($p_d$) als Eingangssignal zugeführt. Das Prozess-Regelungsverfahren des Prozessreglers (120) kann dazu eingerichtet sein, auf den Prozess einwirkende Störgrößen zu kompensieren. Über ein im Prozessregler (120) implementiertes Regelungsverfahren wird aus der Prozess-Regeldifferenz ($p_e$) eine Ausgangsgröße erzeugt, die als Prozess-Stellsignal ($p_g$) bezeichnet werden kann und die Zielposition des Stellventils (35) beschreibt. Dieses Prozessstellsignal ($p_g$) wird dem Stellgerät (1) zugeführt. Zusätzlich erfasst das Ventilstellgerät (1) ein die tatsächliche Position des Stellventils repräsentierendes Signal (i). Daraus ermittelt der Stellungsregler (31) des Ventilstellgeräts (1) ein Stellsignal (g) zur Ansteuerung eines Aktuators (33), der beispielsweise ein pneumatischer oder elektrischer Stellantrieb eines Stellventils sein kann. Das Regelungsverfahren des Stellungsreglers (31) kann dazu eingerichtet sein, die innerhalb des Ventilstellgeräts wirkenden Ventilstörgrößen zu kompensieren.

EP 1 451 649 B1 betrifft das Erkennen und Unterscheiden von Instabilitäten in einem Stellgerät. Bei einem in einer Prozessumgebung installierten Ventilstellgerät mit Stellungsregler, Aktuator und Stellventil soll erkannt werden, ob eine unerwünschte Schwingung aufgrund einer mechanischen Störung der Verbindung des Aktuators mit dem Stellventil oder aufgrund einer fehlerhaften Konfiguration eines Stellungsreglers auftritt. Dazu schlägt EP 1 451 649 B1 vor, Signale innerhalb des Ventilstellgeräts zu erfassen und mittels einer Einschätzungseinheit das Vorliegen und die Quelle von Instabilitäten zu ermitteln. Zur Erkennung des Vorliegens einer Instabilität soll die Einschätzungseinheit statistische Analysen durchführen. Um die Ursache der erkannten Instabilität zu erkennen, soll die Einschätzungseinheit anhand von Phasenwinkeln kausal korrelierter Signale prüfen, ob im Regelkreis des Ventilstellgeräts ein Grenzzyklus vorliegt. Gegebenenfalls soll der zeitliche Versatz zwischen Stelldruck und Ventilstellung bestimmt werden, um die Fehlerursache im Stellgerät zu lokalisieren. Die in dem in EP 1 451 649 B1 beschriebene Diagnoseroutinen sind typisch auf innerhalb des Stellgeräts lokalisierte Fehlerursachen gerichtet.

Störeffekte, die sich aus dem Zusammenspiel von Ventilstellgerät und übergeordnetem Prozessregler ergeben, können oft nur unvollständig berücksichtigt werden. Das erschwert die Diagnose von Problemursächlichkeiten in Situationen, in denen mehrere Regelschleifen einer Reglerkaskade ein unerwünschtes Verhalten zeigen. Zudem kann die Diagnose eines vermeintlich im Ventilstellgerät verorteten Fehlers ein Artefakt eines dem Ventilstellgerät über den Prozessregler aufgeprägten Betriebsverhaltens sein. In solchen Fällen kann es nützlich sein, der in einem Ventilstellgerät ausgeführten Diagnose zusätzlichen Prozesssignale bereitzustellen, die eine zielsicherere Identifikation der tatsächlichen Fehlerursache erlauben.

US 7,085,610 B2 betrifft eine industrielle Prozessdiagnosevorrichtung zum Identifizieren einer Quelle oder Grundursache einer Anomalie in einem industriellen Prozess. Eine Diagnose der Prozessregelkreise in einer prozesstechnischen Anlage soll auf Basis einer Vielzahl von Prozesssignalen in einer prozesstechnischen Anlage (einschließlich Prozessvariablen, Regelsignalen und Diagnosesignalen) mithilfe einer Grundursachenberechnungsvorrichtung bestimmt werden. Die Grundursachenberechnungsvorrichtung soll zur Bestimmung der Grundursache einer Anomalie eine Analyse durchführen, die beispielsweise regelbasiert sein oder mittels regressiven Lernens, Fuzzy Logic oder eines neuronalen Netzwerks durchgeführt werden kann. Die Grundursachenberechnungsvorrichtung soll in einer beliebigen Prozessvorrichtung einer prozesstechnischen Anlage implementiert werden, beispielsweise in einem Transmitter, einem Regler, einem mobilen Kommunikationsgerät oder einem Computer in einer zentralen Leitwarte. In der Praxis hat sich gezeigt, dass Prozesssignale, die erforderlich zur Durchführung einer Diagnose zur Bestimmung einer Grundursache von Fehlern im Zusammenspiel kaskadierter Regelschleifen wären, allenfalls den übergeordneten Prozessreglern vorliegen. Untergeordneten Ventilstellgeräten werden Prozesssignale aus übergeordneten Regelschleifen oder anderen Ventilstellgeräten im Allgemeinen nicht mitgeteilt. Oftmals stehen zur Übermittlung verschiedenster Prozesssignale gar keine Kommunikationsschnittstellen bereit. Selbst wenn alle erforderlichen Schnittstellen bereitstünden, können viele Prozesssignale aufgrund der begrenzten verfügbaren Bandbreite in typischen Kommunikationsnetzen prozesstechnischer Anlagen einzelnen Ventilstellgeräten praktisch nicht bereitgestellt werden, insbesondere nicht in Echtzeit.

Samson Aktiengesellschaft

EP 1 599 712 A0 offenbart ein Verfahren zur Durchführung einer Online-Ventildiagnose für ein in einem Prozess arbeitendes Ventil, umfassend das Erhalten von Ventilinformationen, während das Ventil als Reaktion auf ein Steuersignal arbeitet, das den Prozess steuert, wobei das Ventil durch eine Reihe von schrittweisen Bewegungen arbeitet, wobei die Ventilinformationen mindestens zwei von Sollwertdaten, Positionsdaten und Druckdaten umfassen, und das Ableiten von mindestens einer der Größen Sprungantwort, Reibung und Federlänge für das Ventil auf der Grundlage der Ventilinformationen.

WO 2020/049214 A1 offenbart für die Fehlerdiagnose den Einsatz eines eingebetteten digitalen Zwillings eines physischen Teils einer Ventilbaugruppe in einem Mikroprozessorsystem eines Ventilstellungsreglers. Der digitale Zwilling umfasst eine Vielzahl von Simulationsmodellparametern, die mindestens einen fehlerbezogenen Simulationsmodellparameter enthalten. Der digitale Zwilling empfängt ein Steuersignal, das eine reale Steuerung des mindestens einen Teils der Ventilbaugruppe darstellt, und erzeugt simulierte Messungen, die sich auf das Ergebnis der simulierten Steuerung beziehen.

WO 2015/012832 A1 offenbart ein Kühlturmsimulationssystem, das eine Messung von einem Kühlturmsensor empfangen und eine vorhergesagte Leistung eines Kühlturmsystems basierend auf einem Modell des Kühlturmsystems erzeugen kann. Das Simulationssystem kann eine geschätzte Ausgabe unter Verwendung eines erweiterten Kalman-Filters mit der Messung und der vorhergesagten Ausgabe als Eingaben erzeugen, wobei die geschätzte Ausgabe eine Eigenschaft des Kühlturmsystems darstellt.

Es kann daher als eine Aufgabe darin gesehen werden, die Probleme des Stands der Technik zu überwinden, insbesondere ein Ventilstellgerät und/oder ein Diagnoseverfahren bereitzustellen, das auf Basis der beschränkten Menge lokal im Ventilstellgerät zur Verfügung stehender Prozesssignale eine Aussage über Fehlerursachen sowohl innerhalb als auch außerhalb des Ventilstellgeräts ermöglicht.

Die Aufgabe wird durch den Gegenstand der unabhängigen Ansprüche 1 und 6 gelöst.

Demnach ist ein Stellungsregler für ein Ventilstellgerät einer prozesstechnischen Anlage vorgesehen. Der Stellungsregler umfasst einen ersten Signaleingang für ein Führungssignal, insbesondere ein Prozessstellsignal von einem Prozessregler der prozesstechnischen Anlage. Das Führungssignal kann insbesondere diskret oder kontinuierlich zeitveränderlich sein. Das Führungssignal kann als eine Zeitreihe definiert sein, wobei insbesondere die Zeitreihe diskrete zeitabhängige Führungswerte umfasst. Der Stellungsregler ist dazu eingerichtet, eine Stellgröße für den Aktuator auf Basis des Führungssignals, insbesondere des Prozessstellsignals, und eines Stellungs-Ist-Signals zu erzeugen. Die Stellgröße kann insbesondere diskret oder kontinuierlich zeitveränderlich sein. Insbesondere umfasst das Ventilstellgerät einen Stellungssensor, wie ein Stellwegsensor oder ein Positionssensor, der abhängig von der ist-Stellung des Stellventils, insbesondere eines Ventilgliedes oder einer Stellstange des Stellventils, ein Stellungs-Ist-Signal generiert und dem Stellungsregler bereitstellt.

Der Stellungsregler kann eine Stellungsreglerelektronik und gegebenenfalls ein computerimplementiertes Stellungsreglermodul umfassen. Der Stellungsregler weist einen ersten Eingang für ein insbesondere elektrisches Führungssignal, insbesondere Prozessstellsignal, auf. Der Stellungsregler kann einen zweiten Eingang für ein insbesondere elektrisches Stellungs-Ist-Signal aufweisen. Insbesondere kann der Stellungsregler einen zweiten Signaleingang für ein Stellungs-Ist-Signal bezüglich eines Stellventils aufweisen, wie einen zweiten Signaleingang zum Empfangen eines Sensorwertes bezüglich einer absoluten oder relativen Stellung des Stellventils. Der Stellungsregler weist einen Ausgang zur Ausgabe der, insbesondere elektrischen oder pneumatischen, Stellgröße für den Aktuator auf. Der Ausgang des Stellungsreglers kann einen digital-analog-Wandler oder einen elektropneumatischen Wandler aufweisen. Der Aktuator kann dazu eingerichtet sein, eine erhaltene elektrische oder pneumatische Stellgröße in eine Kraft oder ein Drehmoment umzuwandeln, mit welcher der Aktuator das Stellventil beaufschlagt. Der Stellungsregler kann zum Erzeugen einer insbesondere pneumatischen Stellgröße für einen Aktuator zum Betätigen des Stellventils auf Basis des Führungssignals und des Stellungs-Ist-Signals eingerichtet sein und einen insbesondere pneumatischen Steuerausgang für die Stellgröße umfassen.

Erfindungsgemäß ist der Stellungsregler dazu eingerichtet, mittels eines konfigurierbaren, auf einen bestimmten Regler, insbesondere den Prozessregler, bezogenen, Reglermodells ausgehend von dem Führungssignal ein Approximations-Signal zu berechnen, wobei das Reglermodell derart konfiguriert ist, dass ein ausgehend von dem Approximations-Signal durch den bestimmten Regler erzeugtes Signal zu dem Führungssignal korrespondiert. Insbesondere können das hypothetische Signal und das Führungssignal einander näherungsweise entsprechen. Das Reglermodell ist insbesondere deterministisch. Einem deterministischen Reglermodell kann eine eindeutige, insbesondere umkehrbare, Korrellation zwischen dem Führungssignal und dem Approximationssignal definieren.

Erfindungsgemäß ist Stellungsregler ferner dazu eingerichtet, ausgehend von dem Führungssignal, insbesondere Prozessstellsignal, und einer auf den Prozessregler bezogenen Regelungsinvertierung ein Approximations-Signal zu bestimmen. Außerdem ist der Stellungsregler dazu eingerichtet wenigstens eine Diagnoseroutine unter Berücksichtigung des Approximations-Signals durchzuführen. Ein Approximations-Signal kann insbesondere diskret oder kontinuierlich zeitveränderlich sein. Das Approximations-Signal kann als eine Zeitreihe definiert sein. Das Approximations-Signal kann als virtuelle Eingangsgrößenzeitreihe bezeichnet sein, wobei insbesondere die Eingangsgrößenzeitreihe diskrete zeitabhängige Eingangsgrößenwerte umfasst.

Der Stellungsregler kann ein computerimplementiertes Invertiermodul umfassen. Der Stellungsregler, insbesondere dessen Invertiermodul, ist dazu eingerichtet, ausschließlich unter Berücksichtigung von in dem Stellgerät bereitstehenden Stellgerätesignalen ein Verhalten des dem Ventilstellgerät übergeordneten Prozessreglers approximativ zu berechnen. Das Invertiermodul kann dazu eingerichtet sein, ein Approximations-Signal auszurechnen, welches korrespondiert zu einem Ist-Signal des Prozessreglers, welches dem Ventilstellgerät vom Prozessregler nicht übermittelt wird. Beispielsweise kann der Stellungsregler ein Approximations-Signal korrespondierend zu einem Prozessregler-Eingangssignal des Prozessreglers bestimmen, wie ein Prozessregler-Ist-Signal.

Die Stellungsregelerelektronik und das Invertiermodul können in Funktionsunion durch eine insbesondere konfigurierbare elektronische Rechen- und Datenspeichereinrichtung des Ventilstellgeräts realisiert sein, beispielsweise einen Mikrocontroller oder dergleichen. Der Stellungsregler kann die Diagnoseelektronik und/oder die Regelungselektronik umfassen. Das Ventilstellgerät, insbesondere dessen Invertiermodul, kann insbesondere dazu ausgelegt sein, auf Basis des von dem Ventilstellgerät empfangen Führungssignals, insbesondere Prozessstellsignals, eine approximiative Berechnung eines Prozess-Soll-Signals oder einer Prozess-Regeldifferenz durchzuführen, um das Approximations-Signal zu bestimmen.

Der Stellungsregler, insbesondere eine Diagnoseelektronik oder ein Diagnosemodul des Ventilstellgerätes, kann sodann eine Diagnoseroutine durchführen, die das zuvor berechnete Approximations-Signal berücksichtigt, um beispielsweise zu prüfen, ob ein Fehler mit einer gewissen Wahrscheinlichkeit, vorzugsweise sicher, innerhalb des Ventilstellgeräts auftritt oder in einer dem Ventilstellgerät übergeordneten Reglerkaskade, insbesondere dem Prozessregler, seine Ursache hat. Beispielsweise kann das Ventilstellgerät dazu eingerichtet sein, zu prüfen, ob das Approximations-Signal in einem unauffälligen oder auffälligen Wertebereich liegt, wobei letzteres auf den übergeordneten Prozessregler als Fehlerquelle hindeutet. Ein Diagnosemodul, ein Stellungsreglermodul und/oder ein Invertiermodul können durch verschiedene zumindest teilweise unterschiedliche Hardwarekomponenten, beispielsweise verschiedene Mikrocontroller eines einzigen Ventilstellgerätes umgesetzt sein oder alternativ durch dieselbe Hardware, beispielsweise einen einzigen Mikrocontroller, des Ventilstellgeräts.

Gemäß einer Ausführung umfasst der Stellungsregler einen mit Prozesskontextdaten belegten Speicher. Der Stellungsregler kann dazu eingerichtet sein, dass Approximations-Signal unter Berücksichtigung der Prozesskontextdaten zu bestimmen. Zusätzlich oder alternativ kann der Stellungsregler dazu eingerichtet sein, die wenigstens eine Diagnoseroutine unter Berücksichtigung der Prozesskontextdaten durchzuführen.

Gemäß einer Ausführung eines Stellungsreglers können Prozesskontextdaten ein insbesondere konstantes Prozess-Soll-Signal charakterisieren. Gemäß einer ersten Ausführung können Prozesskontextdaten einen zeitlichen Signalverlauf des Prozess-Soll-Signals und insbesondere ein zeitlich konstantes Prozess-Soll-Signal charakterisieren. Gemäß einer Weiterbildung können Prozesskontextdaten bezogen auf einen bestimmten Zeitabschnitt ein insbesondere konstantes Prozess-Soll-Signal definieren. Gemäß einer zweiten Ausführung können Prozesskontextdaten einen definierten Satz bestimmter Zeitpunkte oder Zeiträume und dazugehörige konstante Prozess-Soll-Signale definieren. Gemäß einer alternativen Ausgestaltung ist es denkbar, dass die Prozesskontextdaten charakteristische Größen eines Prozess-Soll-Signals definieren. Eine charakteristische Größe kann insbesondere ein bezüglich des Signalverlaufs des Prozess-Soll-Signals, der ersten Ableitung des Signalverlaufs oder der zweiten Ableitung des Signalverlaufs konstanter Wert sein. Unter Umständen kann die Approximation eines Prozesssignals durch einen sinusförmigen Zeitverlauf angemessen sein. Im Hinblick auf ein Prozess-Soll-Signal mit bekanntlich oder angenommenem sinuskurvenförmigen Verlauf können als Prozesskontextdaten charakteristische Größen wie Amplitude, Frequenz, Offset des Prozess-Soll-Signals in zeitlicher Dimension und/oder Amplituden-Dimension insbesondere relativ zu einem Prozess-Ist-Signal umfassen. Im Hinblick auf ein Prozess-Soll-Signal mit bekanntlich oder angenommenem sprungartigem Verlauf können als Prozesskontextdaten charakteristische Größen wie Sprungamplitude und/oder Sprungzeitpunkt definiert sein. Prozesskontextdaten können rechnerisch eine Regler-Struktur des Prozessreglers für ein Reglermodell definieren, beispielsweise eine bestimmten PID-Regler-Struktur, wie einen P-, I-, PI-, PD- oder PID-Regler-Struktur; oder alternativ eine andere Regler-Struktur, wie eine Zwei-Punkt-Regler-Struktur.

Der Stellungsregler, insbesondere das Invertiermodul, kann dazu eingerichtet sein, das Approximations-Signal unter Berücksichtigung der Prozesskontextdaten zu bestimmen. Beispielsweise kann der Stellungsregler dazu eingerichtet sein, auf Basis des von dem Prozessregler empfangenen Führungssignals, insbesondere Prozessstellsignals, und auf Basis einer in den Prozesskontextdaten enthaltenen Beschreibung der Regler-Struktur des Prozessreglers eine approximative Berechnung einer Prozessregler-Regeldifferenz oder eines Prozess-Ist-Signals durchzuführen. Alternativ oder zusätzlich kann der Stellungsregler, insbesondere das Diagnosemodul, ergänzend zu dem Approximations-Signal Prozesskontextdaten berücksichtigen, um zu bestimmen, ob das approximierte Verhalten des Reglers auf einen Normalbetrieb oder einen fehlerhaften Betrieb des Reglers hindeutet.

Gemäß einer anderen Weiterbildung, die mit der vorherigen kombinierbar ist, ist der Stellungsregler ferner dazu eingerichtet, die wenigstens eine Diagnoseroutine unter Berücksichtigung von zumindest einem Stellgerätesignal aus der Liste umfassend Stellgröße, Stellungs-Ist-Signal und Führungssignal, insbesondere Prozessstellsignal, durchzuführen. Insbesondere kann ein Stellgerätesignal ausgewählt sein aus der Liste bestehend aus Stellgröße, Stellungs-Ist-Signal und Führungssignal. Beispielsweise kann die Diagnoseroutine eine Prüfung umfassen, bei der wenigstens in dem Stellungsregler verfügbares Stellgerätesignal zur Durchführung einer bekannten Stellgerätediagnose verwendet wird. Diagnoseroutinen sind beispielsweise bekannt aus DE 10 2017 124 293 A1, DE 10 2010 015 647 B4, DE 10 2006 003 750 B4, DE 10 2005 024 674 B4, DE 10 2005 024 686 B4 und DE 197 23 650 B9.

Gemäß einer weiteren alternativen oder zusätzlichen Ausgestaltung kann der Stellungsreglers, insbesondere das Invertiermodul, dazu eingerichtet sein, ein Approximations-Signal zu bestimmen, das zu einem Prozesssignal, wie ein Prozess-Regeldifferenz-Signal und/oder Prozess-Ist-Signal, des Prozessreglers korrespondiert, das dem Ventilstellgerät nicht bereitsteht. Das Ventilstellgerät kann dazu eingerichtet sein, ein Approximations-Signal zu bestimmen, das zu einem Prozesssignal des Prozessreglers korrespondiert, welches nicht direkt vom Prozessregler an das Ventilstellgerät übermittelt wird. Auf diese Weise wird das Ventilstellgerät befähigt, ein Prozesssignal eines übergeordneten Regelkreises approximativ abzubilden. Das approximativ abgebildete Prozesssignal kann verwendet werden, um eine Diagnose hinsichtlich eventueller Fehler durchzuführen, deren Grundursache nicht in der Kaskadenstufe des Ventilstellgeräts sondern in der Kaskadenstufe des dem Ventilstellgerät übergeordnetem Prozessreglers liegt.

Die Offenbarung betrifft auch ein Ventilstellgerät für eine prozesstechnische Anlage sein, das ein Stellventil zum Einstellen der Prozessfluidströmung, einen Aktuator zum Betätigen des Stellventils und einen wie oben beschrieben ausgeführten Stellungsregler zum Erzeugen einer Stellgröße für den Aktuator umfasst. Der Aktuator kann ein pneumatischer Aktuator, wie ein pneumatischer Stellantrieb, oder ein elektrischer Aktuator, wie ein elektrischer Stellantrieb, sein.

Die Offenbarung betrifft auch eine prozesstechnische Anlage, beispielsweise eine Lebensmittel verarbeitende Anlage, wie ein Brauerei, ein Kraftwerk, wie ein Nuklearkraftwerk, eine chemische Anlage, wie eine petrochemische Anlage, oder dergleichen. Die prozesstechnische Anlage umfasst ein Ventilstellgerät zum Einstellen einer Prozessfluidströmung. Die prozesstechnische Anlage kann mehrere Ventilstellgeräte zum Einstellen einer oder mehrerer Prozessfluidströmungen umfassen. Eines oder mehrere Ventilstellgeräte der prozesstechnischen Anlage können wie oben beschrieben ausgeführt sein.

Ferner umfasst die prozesstechnische Anlage wenigstens einen Prozessfluidnutzer, der die von dem Ventilstellgerät insbesondere stromaufwärts eingestellte Prozessfluidströmung empfängt oder die von dem Ventilstellgerät insbesondere stromabwärts eingestellte Prozessfluidströmung abgibt. Einen Prozessfluidnutzer kann beispielsweise ein Reaktor, ein Wärmetauscher, ein Kühlturm oder dergleichen sein. Als Prozessfluidnutzer kann im Allgemeinen eine Komponente einer prozesstechnischen Anlage bezeichnet sein, die Prozessfluid erzeugt, gebraucht oder verbraucht.

Die prozesstechnische Anlage umfasst außerdem einen Prozesssensor, der ein auf den Prozessfluidnutzer und/oder das Prozessfluid bezogenes Prozess-Ist-Signal erfasst. Ein auf das Prozessfluid bezogenes Prozess-Ist-Signal kann beispielsweise dessen Temperatur, Druck, Volumenstrom, Strömungsgeschwindigkeit oder dergleichen beschreiben. Auf einen Prozessfluidnutzer bezogenes Prozess-Ist-signal kann insbesondere einen auf den Prozessfluidnutzer bezogenen Messwert beschreiben, wie ein Mischungsverhältnis, einen Anteil eines von mehreren in dem Prozess zu verarbeiten Materials, eine Umgebungstemperatur, einen Druck, eine Druckdifferenz oder einen Druckgradienten im Prozessfluidnutzer, oder dergleichen.

Darüber hinaus umfasst die prozesstechnische Anlage einen Prozessregler, der ein Prozessstellsignal als Führungssignal für das Ventilstellgerät bereitstellt, das abhängig von einem Prozess-Soll-Signal und dem Prozess-Ist-Signal ist. Der Prozessregler kann dazu ausgebildet sein, das Prozess-Ist-signal mit dem Prozess-Soll-signal zu vergleichen und ausgehend von dem Vergleich ein Prozessstellsignal für das Ventilstellgerät bereitzustellen. Beispielsweise kann der Prozessregler eine Prozess-Regeldifferenz zwischen dem Prozess-Soll-Signal und dem Prozess-Ist-Signal berechnen und durch eine Prozess-Regelungsroutine ausgehend von der Prozess-Regeldifferenz ein Prozessstellsignal bestimmen und dem Ventilstellgerät bereitstellen. Der Prozessregler kann optional in einer PID-Regler-Struktur umgesetzt sein. Insbesondere ist die prozesstechnische Anlage derart ausgestaltet, dass der Prozessregler dem Ventilstellgerät ausschließlich das Prozessstellsignal insbesondere direkt bereitstellt. Insbesondere ist die prozesstechnische Anlage derart ausgestaltet, dass der Prozessregler dem Ventilstellgerät weder das Prozess-Soll-Signal noch das Prozess-Ist-Signal noch die Prozess-Regeldifferenz insbesondere direkt übermittelt.Die Offenbarung betrifft außerdem ein Diagnoseverfahren für ein Ventilstellgerät, das in einer prozesstechnischen Anlage verwendet wird, die ein Ventilstellgerät und einen Prozessregler umfasst. Im Zuge der Verwendung des Ventilstellgeräts in der Anlage wird dem Ventilstellgerät vom Prozessregler ein Prozessstellsignal bereitgestellt. Durch den Prozessregler kann das Prozessstellsignal auf Basis eines oder mehrerer Prozesssignale bestimmt werden. Das Ventilstellgerät kann insbesondere wie oben beschrieben ausgeführt sein. Die prozesstechnische Anlage kann insbesondere wie oben beschrieben ausgeführt sein.

Bei dem Diagnoseverfahren wird insbesondere durch das Ventilstellgerät ausgehend von dem Prozessstellsignal und einem auf einen bestimmten Regler, insbesondere den Prozessregler, bezogenen Reglermodell, insbesondere einer Regelungsinvertierung, ein Approximations-Signal bestimmt, das insbesondere zu einem Prozesssignal korrespondiert. Von dem Ventilstellgerät wird wenigstens eine Diagnoseroutine unter Berücksichtigung dieses Approximations-Signals durchgeführt. Auf diese Weise vermag ein Diagnoseverfahren des Ventilstellgerätes nicht bloß beschränkt auf die im Stellgerät direkt verfügbaren Stellgrößen durchgeführt zu werden. Die Diagnoseroutine kann durchgeführt werden, um ein Diagnoseergebnis zu ermitteln und einen das Diagnoseergebnis repräsentierenden Diagnosecode zu erzeugen. Es hat sich als vorteilhaft herausgestellt, dass von dem Diagnoseverfahren zumindest approximativ auch Prozesssignale berücksichtigt werden können, die zwar in einem übergeordneten Regler, insbesondere einem übergeordneten Prozessregler, oder einer übergeordneten Prozessregelkaskade vorliegen, von dort jedoch nicht dem Ventilstellgerät direkt zugeführt werden. Auf diese Weise kann eine in einem Ventilstellgerät implementierte Diagnoseroutine Fehlerursachen außerhalb der Sphäre bzw. Kaskadenstufe des Stellungsreglers identifizieren.

Die Offenbarung kann auch ein Verfahren zum Betreiben eines Ventilstellgerätes in einer prozesstechnischen Anlage mit einem Prozessregler betreffen, wobei dem Ventilstellgerät vom Prozessregler ein Prozessstellsignal bereitgestellt wird. Das Prozessstellsignal wird gegebenenfalls in Kombination mit einem Stellungs-Ist-Signal von dem Ventilstellgerät verarbeitet, um ein Stellsignal zu bestimmen. Mit dem insbesondere elektrischen oder pneumatischen Stellsignal wird einen Aktuator des Ventilstellgerätes angesteuert, damit der Aktuator ein Stellventil betätigt, um eine Prozessfluidströmung einzustellen. Bei dem Betriebsverfahren kann das Stellsignal ein pneumatisches oder elektrisches Stellsignal sein, das von einer Regelungselektronik des Ventilstellgerätes erzeugt und einem Aktuator des Ventilstellgerätes bereitgestellt wird. Von dem Ventilstellgerät kann im Rahmen des Betriebsverfahrens zum Erzeugen der Stellgröße eine Stellungs-Regeldifferenz zwischen dem Prozessstellsignal und dem Stellungs-Ist-Signal berücksichtigt werden. Das Betriebsverfahren umfasst dass das Ventilstellgerät wenigstens ein Diagnoseverfahren wie oben beschrieben durchführt. Das Diagnoseverfahren kann das Prozessstellsignal, das Stellungs-Ist-Signal und/oder die Stellgröße berücksichtigen.

Gemäß einer Weiterbildung des Diagnoseverfahrens wird das Reglermodell, insbesondere die Regelungsinvertierung, d.h. die Bestimmung des Approximations-Signals, und/oder die Diagnoseroutine basierend auf Prozesskontextdaten durchgeführt, die das Prozess-Soll-Signal charakterisieren. Die Prozesskontextdaten können insbesondere ein konstantes Prozess-Soll-Signal charakterisieren. Beispielsweise kann bei dem Diagnoseverfahren zunächst eine Regelungsinvertierung durchgeführt werden, die bezogen ist auf eine bekannte Regler-Struktur des Prozessreglers. Prozesskontextwerte können eine oder mehrere Randbedingungen einer den Prozessregler abbildenden mathematischen Gleichung oder eines Gleichungssystems definieren. Die Diagnoseroutine kann eine Differenz zwischen einem Prozess-Approximations-Signal, das zu einem Prozess-Ist-Signal korrespondiert, und einem approximierten insbesondere konstanten Prozess-Soll-Signal in Form der Prozesskontexdaten berechnen, um ein weiteres Approximations-Signal zu bestimmen, das zu einer Prozess-Regeldifferenz korrespondiert. Die Diagnoseroutine kann ein Approximations-Signal, das zu einer Prozess-Regeldifferenz korrespondiert, mit einem zulässigen Wertebereich vergleichen, und bei einer Abweichung von dem zulässigen Wertebereich ein fehlerhaftes Verhalten des Prozessreglers als Diagnoseergebnis ausgeben.

Bei einer Weiterbildung des Diagnoseverfahrens kann ein Zeitintervall bestimmt werden, auf das sich die Prozesskontextdaten beziehen. Die Diagnoseroutine kann bezogen auf einen vorbestimmtes Zeitintervall durchgeführt werden, auf welchen sich auch die Prozesskontextdaten beziehen. Beispielsweise können Prozesskontextdaten bezogen auf einen oder mehrere zeitstationäre Abschnitte definiert sein, in denen die Prozesskontextdaten ein konstantes Prozess-Soll-Signal charakterisieren, wobei unterschiedliche insbesondere aufeinanderfolgende Zeitintervalle verschiedenen Prozess-Soll-Signalen zugeordnet sein können.

Gemäß einer alternativen Ausführung können die Prozesskontextdaten eine Verzögerungsstrecke und/oder eine Signalformdefinition des Prozess-Soll-Signals umfassen. Bei einer derartigen Ausgestaltung des Diagnoseverfahrens kann vorteilhaft sein, wenn dem Ventilstellgerät ein Prozess-Soll-Signal bereitgestellt wird. Das Diagnoseverfahren kann anhand der Prozesskontextdaten und wenigstens eines vorgegebenen Prozess-Soll-Signals unter Berücksichtigung einer vorbekannten Verzögerungsstrecke und/oder unter Berücksichtigung einer bekannten Signalformdefinition durchgeführt werden. Vermittels der Bestimmung eines Zeitintervalls, auf welches sich Prozesskontextdaten beziehen, kann das Diagnoseverfahren eine zeitliche Korrelation zwischen Prozesskontextdaten und in dem Ventilstellgerät erfassten Ventilstellgerätegrößen, wie Prozessstellsignal, Stellungs-Ist-Signal, Stellungs-Regeldifferenz der Regelungsinvertierung und/oder der Diagnoseroutine zugrunde legen. So kann beispielsweise das Diagnoseverfahren eine Verzögerungsstrecke umfassen, um einen zeitlichen Versatz, insbesondere aufgrund einer Regelungszykluszeit, zwischen dem Empfang eines Prozess-Soll-Signals durch den Prozessregler und der Abgabe eines Prozessstellsignals durch den Prozessregler zu berücksichtigen, damit das Diagnoseverfahren, insbesondere die Regelungsinvertierung und/oder die Diagnoseroutine, kausal eng miteinander in Bezug stehende Signale analysiert. Das Diagnoseverfahren kann beispielsweise als Prozesskontextdaten eine Signalformdefinition des Prozess-Soll-Signals berücksichtigen, aus denen beispielsweise hervorgeht, dass das Prozess-Soll-Signal einen rampenartigen Verlauf, einen sinuskurvenförmigen Verlauf oder einen sprungartigen Verlauf hat. Wenn die Signalform des Prozess-Soll-Signals zumindest näherungsweise bekannt ist, erlaubt dies dem Ventilstellgerät, ein präziseres Diagnoseverfahren durchzuführen, selbst wenn das Prozess-Soll-Signal nicht als konstanter Wert charakterisierbar ist.

Gemäß einer Ausführung eines Diagnoseverfahrens wird das Prozessstellsignal gespeichert. Insbesondere wird der zeitliche Verlauf des Prozessstellsignals gespeichert. Es kann von Vorteil sein, wenn von dem Diagnoseverfahren das Prozessstellsignal oder dessen zeitlicher Verlauf beispielsweise als Serie diskreter Werte gespeichert wird, insbesondere bezugnehmend auf einen Zeitintervall, sodass das Diagnoseverfahren das Prozessstellsignal oder dessen zeitlichen Verlauf als Grundlage der Regelungsinvertierung und/oder der Diagnoseroutine verwenden kann. Mithilfe eines gespeicherten Prozessstellsignals oder dem gespeicherten zeitlichen Verlauf des Prozessstellsignals kann insbesondere in Kombination mit Prozesskontextdaten, welche auf einen Zeitintervall bezogen sind, das Verhalten eines übergeordneten Prozessreglers präzise abgebildet werden.

Gemäß einer bevorzugten Ausführung wird die Regelungsinvertierung des Diagnoseverfahrens auf Basis einer vorbestimmten zeitkontinuierlichen, insbesondere realen und/oder parallelen, Regler-Struktur bestimmt. Eine vorbestimmte zeitkontinuierlichen Regler-Struktur kann korrespondieren zu einer analogen Prozessregler-Regelungsroutine. Gemäß einer alternativen Ausgestaltung kann die Regelungsinvertierung des Diagnoseverfahrens auf Basis einer vorbestimmten zeitdiskreten, insbesondere realen und/oder parallelen, Regler-Struktur bestimmt werden. Insbesondere kann die Regelungsinvertierung auf Basis einer PID-Regler-Struktur durchgeführt werden. Die vorbestimmte zeitdiskrete Regler-Struktur kann korrespondieren zu einer digitalen Regelung des Prozessreglers.

Die Regelungsinvertierung oder ein Invertiermodul kann dazu eingerichtet sein, mithilfe einer invertierten Übertragungsfunktion G eines Prozess-PID-Reglers die Inverse im Z-Bereich über der Variablen z durch

$$(1) \qquad G^{-1}(z) = \frac{1}{K_P} \frac{a2 \cdot z^2 - a1 \cdot z + a0}{b2 \cdot z^2 + b1 \cdot z + b0}$$

Für die in vielen Fällen anwendbare Annahme: $\tau = T_C/2$ kann die Übertragungsfunktion vereinfacht werden zu:

$$(2) \qquad G^{-1}(z) = \frac{z^2 - z}{a \cdot z^2 + b \cdot z + c}$$

zu berechnen. Die Parameter a0, a1, a2, sowie bo, b1 und b2 bzw. a, b und c können in gleicher Weise wie die Prozesskontextdaten übermittelt werden, welche den Prozessregler charakterisieren. Die Parameter können in einer zweckmäßigen Ausgestaltung für die Berechnung einer invertierte Prozess-Regelungsfunktion konstante vorbestimmte Parameter (a, b und/oder c) umfassen. Die gespeicherten Parameter können der Regelungsinvertierung zur Bestimmung eines Prozess-Approximations-Signals $a_p$ zugrunde gelegt werden. Es hat sich gezeigt, dass hinreichend genaue Ergebnisse bei vereinfachter Berechnung bereitgestellt werden können, wenn für c=0 angenommen wird, sodass sich die vereinfachte Gleichung

$$(3) \qquad G_{ab}^{-1}(z) = \frac{z - 1}{a \cdot z + b}$$

ergibt. Die Parameter a, b und/oder c können dem Ventilstellgerät per manueller Nutzereingabe vorgegeben werden.

Es ist denkbar, dass Prozesskontextdaten, von dem Ventilstellgerät mithilfe einer Initalisierungroutine zumindest teilweise automatisiert bestimmt werden können. Auf Grundlage von Referenzanlagen oder Erfahrungswerten können Prozesskontextdaten auf einem Speicher des Ventilstellgeräts, insbesondere des Stellungsreglers, hinterlegt sein.

Gemäß einer Ausführung kann das Diagnoseverfahren die Berechnung eines approximierten Prozess-Ist-Signals umfassen. Das approximierte Prozess-Ist-Signal kann mithilfe einer insbesondere linearen Funktion ausgehend dem Prozessstellsignal approximiert berechnet werden. Beispielsweise kann bei einem besonders einfachen Ansatz das Prozess-Ist-Signal der Stellgröße gleichgesetzt werden.

Bei einer bevorzugten Ausführung des Diagnoseverfahrens wird ein Vergleich des Diagnoseergebnisses mit einem vorbestimmten Soll-Verhalten des Stellgeräts durchgeführt. Falls dabei eine Abweichung zwischen dem Diagnoseergebnis und einem vorbestimmten Soll-Verhalten festgestellt wird, kann ein Diagnosecode erzeugt werden. Falls dabei keine Abweichung zwischen dem Diagnoseergebnis und dem vorbestimmten Soll-Verhalten festgestellt wird, kann ein Diagnosecode unterdrückt und/oder gelöscht werden. Indem das Diagnoseverfahren zunächst eine auf den dem Ventilstellgerät übergeordneten Prozessregler bezogene Regelungsinvertierung durchführt, um ein Approximations-Signal zu erzeugen, kann dieses Prozess-Approximations-Signal, welches das Verhalten des dem Ventilstellgerät übergeordnetem Prozessregler abbildet, im weiteren Diagnoseverfahren hergenommen werden, um zu überprüfen, ob das tatsächliche Verhalten des Ventilstellgeräts unter Berücksichtigung des approximierten Verhaltens des Prozessreglers mit einem gewünschten oder zumindest tolerierten Ventilstellgeräte-Soll-Verhalten übereinstimmt. Falls das Ventilstellgerät zwar ein auffälliges Verhalten zeigt, jedoch gleichzeitig anhand des mit dem Diagnoseverfahren bestimmten Approximations-Signals auszumachen ist, dass das auffällige Verhalten mit einem vom Prozessregler aufgeprägten Verhalten übereinstimmt, kann ein Diagnosecode unterdrückt und/oder gelöscht werden, welcher ansonsten infolge des auffälligen Verhaltens des Ventilstellgeräts erzeugt und gegebenenfalls ausgegeben worden wäre. Dadurch kann die Ausgabe falsch positiver Diagnosecodes vermieden werden. Alternativ oder zusätzlich kann ein Diagnosecode erzeugt werden, der auf ein auffälliges Verhalten des dem Ventilstellgerät übergeordneten Prozessreglers hinweist, falls das Diagnoseergebnis eine Diskrepanz zu einem vorbestimmten Soll-Verhalten erkennen lässt. Insbesondere kann dann ein Diagnosecode ausgegeben werden, wenn bei dem Vergleich festgestellt wird, dass das Ist-Verhalten des Ventilstellgerätes von einem vorbestimmten Soll-Verhalten abweicht, während ausgehend von dem mittels Approximations-Signalabgebildeten approximierten Verhalten des Prozessreglers kein auffälliges Verhalten des Ventilstellgeräts indiziert ist.

Weitere Eigenschaften, Vorteile und Merkmale werden durch die folgende Beschreibung bevorzugter Ausführungen anhand der beiliegenden Zeichnungen deutlich, in denen zeigen:

Figur 1    eine schematische Darstellung einer prozesstechnischen Anlage mit einem Ventilstellgerät;

Figur 2    ein schematisches Blockdiagramm eines digitalen Stellungsreglers,

Figur 3    eine schematische Darstellung eines ersten Betriebsverfahrens der prozesstechnischen Anlage mit dem Ventilstellgerät; und

Figur 4    eine schematische Darstellung eines zweiten Betriebsverfahrens der prozesstechnischen Anlage mit dem Ventilstellgerät.

In der nachfolgenden Beschreibung bevorzugter Ausführungen werden zur Vereinfachung der Lesbarkeit gleiche oder ähnliche Komponenten mit dem gleichen oder ähnlichen Bezugzeichen versehen.

Die Ausführungen können insbesondere illustrieren, wie ein Stellungsregler in einem Stellgerät durch die approximative Rekonstruktion der Führungs- oder Regelgröße des übergeordneten Reglers zusätzliche Informationen für die Diagnose des Stellgeräts gewinnen kann und wie die approximative Rekonstruktion fallweise mathematisch als Invertierung der Übertragungsfunktion eines ausreichend genauen Modells des übergeordneten Reglers verstanden werden kann.

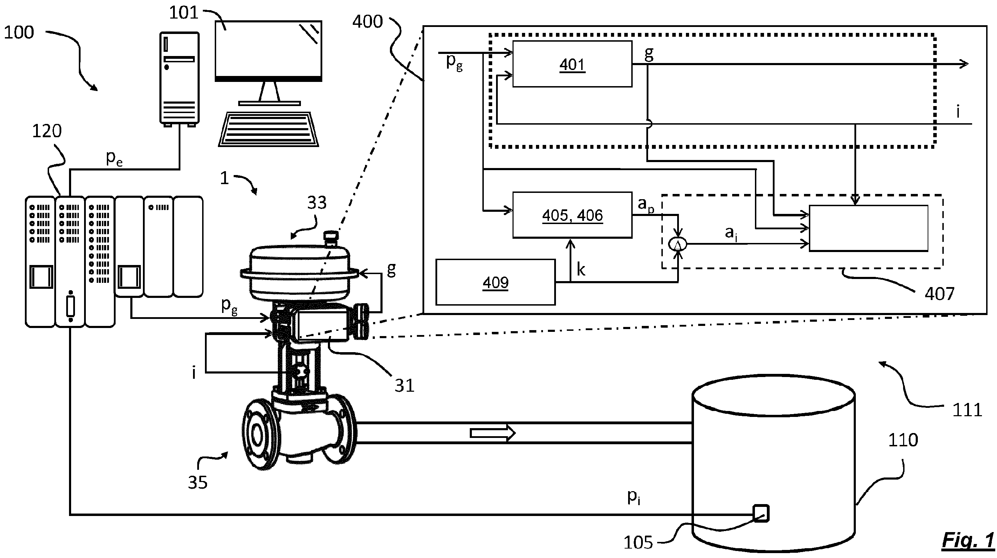

Figur 1 zeigt eine schematische Darstellung einer prozesstechnischen Anlage 100, die eine oder mehrere kaskadierte Regelkreise beinhaltet. Der Einfachheit halber ist in der schematischen Darstellung gemäß Figur 1 lediglich eine einzige Regelungskaskade. dargestellt. Die Regelungskaskade umfasst einen übergeordneten Prozessregler 120 und einen untergeordnetes Ventilstellgerät 1. Dem übergeordneten Prozessregler 120 können genau ein Feldgerät, zwei, drei oder mehr Feldgeräte, insbesondere Stellgeräte, untergeordnet sein, was hier nicht im Detail dargestellt ist.

Der übergeordnete Prozessregler 120 kann dazu eingerichtet sein, einen Anlagenprozess 111 zu führen. Zu diesem Zweck kann der Prozessregler 120 als Eingangssignal einen Prozess-Ist-Signal $p_i$ oder mehrere Prozess-Ist-Signale beispielsweise von einem Prozesssensor 105 eines Prozessfluidnutzers 110 erhalten. Hinsichtlich eines gewünschten Prozessverhaltens wird dem Prozessregler 120 ein Prozess-Soll-Signal $p_W$ vorgegeben. Das Prozess-Soll-Signal $p_W$ kann dem Prozessregler 120 beispielsweise mittels einer Benutzerschnittstelle, etwa eines Kontrollrechners 101 in einer Leitwarte einer prozesstechnischen Anlage, vorgegeben werden. Der Prozessregler 120 ist dazu eingerichtet, ein Vergleich des Prozess-Soll-Signals $p_W$ und das Prozess-Ist-Signals $p_i$ durchzuführen, auf dessen Basis eine Prozess-Regeldifferenz $p_e$ bestimmt wird. Anhand der Prozess-Regeldifferenz $p_e$ wird eine Prozess-Regelungsroutine vom Prozessregler 120 umgesetzt. Als Ergebnis der Prozess-Regelungsroutine gibt der Prozessregler 120 ein Prozessstellsignal $p_g$ aus, welcher einem untergeordneten Ventilstellgeräten 1 zugeführt wird, damit das Ventil-Stellgerät 1 in einer gewünschten Weise auf ein Prozessfluid einwirkt, mit dem Ziel, das Prozess-Ist-Signal $p_i$ an das Prozess-Soll-Signal $p_W$ anzugleichen.

Das Ventilstellgerät 1 umfasst einen Stellungsregler 31, einen Aktuator 33 und ein Stellventil 35. Das Stellventil 35 wirkt auf das Prozessfluid ein, welches dem Prozessfluidnutzer 110 bereitgestellt wird. Alternativ können Stellventil auch auf den Abfluss eines Prozessfluides aus einem Prozessfluidnutzer 110 einwirken (nicht dargestellt). Das Stellventil 35 kann Einfluss nehmen auf einen Prozessfluiddruck, eine Strömungsgeschwindigkeit, oder dergleichen. Es sei klar, dass ein Prozessfluidnutzer 110 mehrere Prozessfluide-Zuflüsse und/oder mehrere Prozessfluid-Abflüsse umfassen kann, wobei Ventilstellgeräte einem einzelnen oder mehreren der Prozessfluid-Zu- und/oder -Abflüsse des Prozessfluidnutzers 110 zugeordnet sein können.

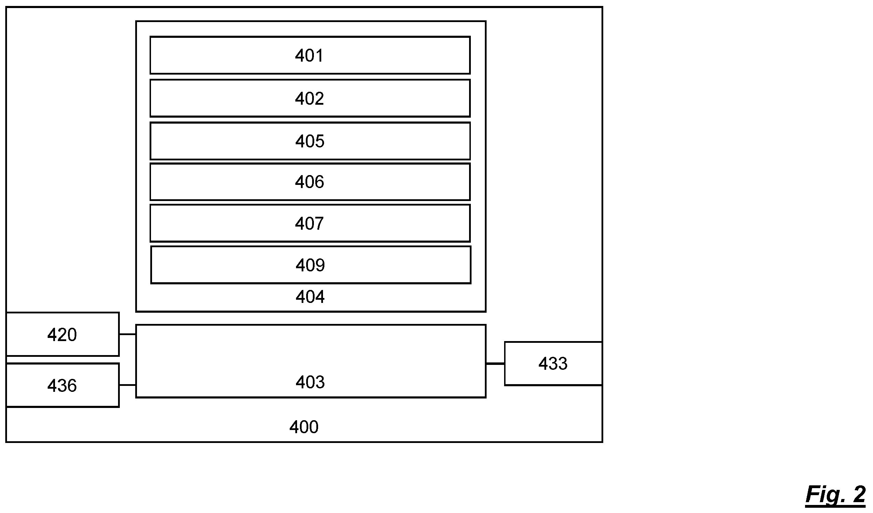

Das Ventilstellgerät 1 umfasst einen Stellungsregler 31 mit einer analogen oder digitale Stellungsreglerelektronik 400, wie unten in der Figur 2 im Detail ausgeführt zumindest teilweise als computerimplementiertes Regelungsmodul 401, realisiert sein kann. Die Stellungsreglerelektronik 400 weist einen ersten Signaleingang 420 für ein Prozessstellsignal $p_g$ und einen zweiten Signaleingang 436 für einen Stellungs-Istwert i auf. Abhängig von dem Stellungs-Istwert i und dem Prozessstellsignal $p_g$ wird mit einer Regelungsroutine ein Vergleich durchgeführt, um eine Stellungsregler-Regeldifferenz zu berechnen und ein Stellsignal g zu bestimmen. Die Stellungsreglerelektronik 400 gibt an einem Ausgang 433 das Stellsignal g zum Betätigen des Aktuators 33 ab.

Die Stellungsreglerelektronik 400 umfasst ferner ein Invertiermodul 405, dem als Signaleingang das Prozessstellsignal $p_g$ vorgegeben wird, und das Prozesskontextdaten k aus einem Speicher 404 erhalten kann, die das Verhalten des übergeordneten Prozessreglers 120 beschreiben. Das Invertiermodul 405 ist dazu eingerichtet, ausgehend von dem Prozessstellsignal $p_g$ ein den übergeordneten Prozessregler 120 beschreibendes Approximations-Signal $a_P$ mittels einer Regelungsinvertierung zu bestimmen. Das Approximations-Signal $a_P$ kann beispielsweise korrespondieren zu einem Prozessregler-Istwert oder zu einer Prozessregler-Regeldifferenz $p_e$. Ein Prozess-Ist-Signal hängt im Allgemeinen ab vom zeitlichen Verlauf eines Prozessregler-Istwerts, beispielsweise eine Serie diskreter Prozessregler-Istwerte oder eine zeitkontinuierliche Entwicklung des Prozessregler-Istwerts. Geeignete Ausgestaltungen und Funktionen des Invertiermodul 405 werden im Folgenden im Detail dargelegt. Das Ventilstellgerät 1 kann ferner ein Diagnosemodul 407, beispielsweise eine Diagnoseelektronik, aufweisen, welche auf das Ventilstellgerät 1 bezogene Diagnoseroutinen durchführen kann. Das Diagnosemodul 407 kann zur Durchführung bekannter Diagnoseroutinen für Ventilstellgeräte eingerichtet sein. Das Diagnosemodul 407 kann dazu eingerichtet sein, abhängig von wenigstens einer Diagnoseroutine wenigstens einen Diagnosecode 408 zu erzeugen. Der Diagnosecode kann an einer optischen Anzeige das Ventilstellgeräts 1 für einen Benutzer dargestellt werden. Der Diagnosecode 408 kann zur Verarbeitung der Prozessleitwarte, dem Prozessregler 120 oder an einen tragbaren Computer, beispielsweise ein Tablet-PC, übermittelt werden. Das Diagnosemodul 407 kann dazu eingerichtet sein, wenigstens eine Diagnoseroutine auf Basis des Approximations-Signals $a_P$ durchzuführen. Das Diagnosemodul 407 kann bei der auf dem Approximations-Signal basierenden Diagnoseroutine weitere in dem Ventilstellgerät 1, insbesondere dessen Stellungsreglerelektronik 31, verfügbare Signale berücksichtigen. Beispielsweise kann das Diagnosemodul 407 bei der Durchführung der Diagnoseroutine auf Basis des Approximations-Signals $a_P$ den Prozessstellsignal $p_g$, das Stellsignal g, ein Stellung-Ist-signal i, eine Stellungsregler-Regeldifferenz oder dergleichen berücksichtigen. Mögliche Ausgestaltungen des Stellungsreglers 400 konfigurierbare elektronische Rechen- und Datenspeichereinrichtung mit computerimplementiertem Diagnosemodul 407 werden nachfolgend beschrieben. Figur 2 zeigt ein Blockschema eines mit einer konfigurierbaren elektronischen Rechen- und Datenspeichereinrichtung 400 gebildeten digitalen Stellungsreglers 31. Die schematische Blockdarstellung verdeutlicht eine digitalisierte Stellungsreglerelektronik 400 mit einer konfigurierbaren elektronischen Rechen- und Datenspeichereinrichtung. Allerdings könnten die vorliegend diesbezüglich offenbarten Funktionen teilweise oder vollständig unter Verwendung analoger Stellungsreglerelektronik-Komponenten realisiert werden.

Die digitale Stellungsreglerelektronik 400 umfasst einen Prozessor 403, beispielsweise in Form eines Mikroprozessors, der dazu eingerichtet ist, unterschiedliche Berechnungen durchzuführen. Der Prozessor 403 der digitalen Stellungsreglerelektronik 400 ist verknüpft mit einem Speicher 404. Auf dem Speicher 404 können verschiedene Daten und/oder Routinen zur Verwendung durch den Prozessor 403 gespeichert sein. Auf dem Speicher 404 kann ein erstes Berechnungsmodul 401 für eine Regelungsroutine des Ventilstellgeräts 1 gespeichert sein. Das erste Berechnungsmodul 401 kann als Regelungsmodul beschrieben werden. Mit dem Regelungsmodul kann eine digitale Stellungsregelung implementiert werden. Das Regelungsmodul 401 kann mit dem Prozessor 403 umgesetzt werden, um am Ausgang 433 der digitalen Stellungsreglerelektronik 400 ein Stellsignal g zur Betätigung des Aktuators 35 bereitzustellen. Der Prozessor 403 kann mithilfe des Regelungsmoduls 401 dazu eingerichtet sein, eine Regelungsroutine auf Basis eines von einem Stellungssensor 36 bereitgestellten Stellungs-Ist-signals i und eines von dem übergeordneten Prozessregler 120 bereitgestellten Prozessstellsignal $p_g$ zu berechnen. Die Regelungsroutine des ersten Berechnungsmoduls 401 kann beispielsweise eine digitale PID-Regelungsroutine sein.

Die Stellungsreglerelektronik 400 kann zwei oder mehr Signaleingänge 420, 436 aufweisen für Signale, die in dem Prozessor 403 gemäß einer Routine verarbeitet werden sollen. Die digitale Stellungsreglerelektronik 400 umfasst einen ersten Signaleingang 420 zum Empfangen eines Prozessstellsignals $p_g$. Dieser erste Signaleingang 420 kann in Ausführungen einen Analog-Digital-Wandler umfassen, um beispielsweise auf Basis einfacher, analoger Signale, etwa eines analogen 4..20 mA Prozessstellsignals, ein digitales Signal zur Verwendung in der digitalen Stellungsreglerelektronik 400 zu generieren. Die digitale Stellungsreglerelektronik 400 umfasst ferner einen zweiten Signaleingang 436 zum Empfangen eines Stellungs-Ist-Signals i. Die digitale Stellungsreglerelektronik 400 umfasst weiterhin einen Stellsignalausgang 433. Der Prozessor 403 kann dazu eingerichtet sein, das Regelungsmodul 401 mit der Regelungsroutine auszuführen, um auf Basis der an den Eingängen 420, 436 empfangenen Signale i, $p_g$ eine Stellungsregelung durchzuführen und als deren Ergebnis ein Stellsignal g zum Betätigen eines Aktuators 33 am Stellsignalausgang 433 bereitzustellen. In Ausführungen kann der Stellsignalausgang 433 einen Digital-Analog-Wandler oder einen elektropneumatischen Wandler aufweisen, um ein dem Aktuator 33 angepasstes Stellsignal g bereitzustellen. Die digitale Stellungsreglerelektronik 400 kann weitere Signaleingänge oder -ausgänge aufweisen (nicht im Detail dargestellt). Ferner kann der Stellungsregler eine Schnittstelle zur manuellen Eingabe von Daten aufweisen.

Der Aktuator 33 kann mit einem Signalverstärker ausgestattet sein, um ein Stellsignal g unter Verwendung von elektrischer und/oder pneumatische Hilfsenergie aus einer Hilfsenergiequelle zu verstärken.

Der Speicher 404 der digitalen Stellungsreglerelektronik 400 kann mit einer oder mehreren Diagnoseroutinen belegt sein, um ein Diagnosemodul 407 zu realisieren. Die Diagnoseroutinen sind zur Durchführung durch den Prozessor 403 konfiguriert sind. Der Prozessor 403 kann eine Diagnoseroutine beispielsweise bezogen auf das Stellsignal g und das Stellungs-Ist-Signal durchführen. Beispielsweise kann eine Diagnoseroutine die Durchführung eines Teilhubtests (Partial-Stroke-Tests) veranlassen und dessen Ergebnis auswerten.

Der Speicher 404 kann mit Eingangsdaten 402 belegt sein, wobei die in dem Speicher 404 hinterlegten Eingangsdaten 402 zweckmäßig einem bestimmten Zeitpunkt oder Zeitintervall zugeordnet sind. In einer Ausführung sind Eingangsdaten 402 ausschließlich Stellgerätesignale. Der Prozessor 403 kann dazu eingerichtet sein, eine Diagnoseroutine unter Verwendung der Eingangsdaten 402 Durchzuführen, die bezogen sind auf ein vorbestimmtes Zeitintervall, beispielsweise um aktuelle Eingangsdaten 402 eines aktuellen Zeitintervalls mit historischen Eingangsdaten 402 eines anderen Zeitintervalls oder bestimmten Referenzintervalls zu vergleichen. Eine Abweichung gegenüber historischen Diagnoseergebnissen aus einem Referenzintervall kann beispielsweise auf einen Verschleiß am Stellventil 35 hindeuten. Die Diagnoseroutine kann dazu ausgestaltet sein, festzustellen, ob ein auffälliger Signalverlauf wie ein Lauf vorliegt.

Das Ventilstellgerät 1 kann wie oben dargelegt einen Stellungsregler 31 umfassen, der dazu eingerichtet ist, eine Diagnoseroutine durchzuführen, indem der Stellungsregler 31 mit einer digitalen Stellungsreglerelektronik 400 ausgestattet ist, die einen Speicher 404 mit darauf hinterlegter Diagnoseroutine 407 und einen Prozessor 403 zum Durchführen der Diagnoseroutine 407 umfasst. Der Stellungsregler 31 kann eine Stellgröße g für einen Aktuator 33 mithilfe der digitalen Stellungsreglerelektronik 400 erzeugen.

Im Rahmen der vorliegenden Offenbarung ist der Stellungsregler ferner dazu eingerichtet, eine Regelungsinvertierung durchzuführen, welche auf einen übergeordneten Prozessregler 120 bezogen ist. Mit der Regelungsinvertierung kann ausgehend von dem Prozessstellsignal $p_g$ ein Approximations-Signal $a_P$ zu bestimmt werden. Das Approximations-Signal $a_P$ kann einer Diagnoseroutine 407 zugrunde gelegt werden. Zu diesem Zweck kann der Speicher 404 der konfigurierbaren elektronischen Rechen- und Datenspeichereinrichtung 400 mit einem zweiten Berechnungsmodul 405 ausgestattet sein, welches als Modelliermodul oder Invertiermodul bezeichnet sein kann.

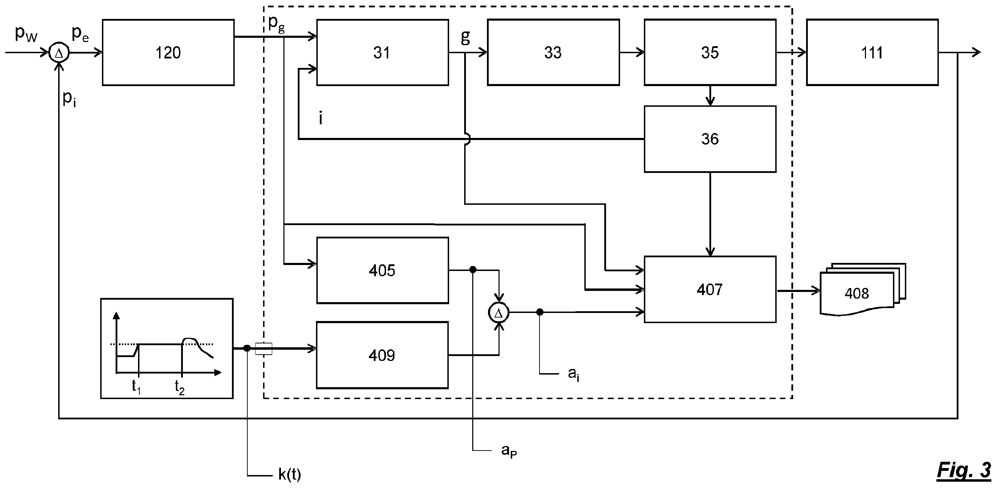

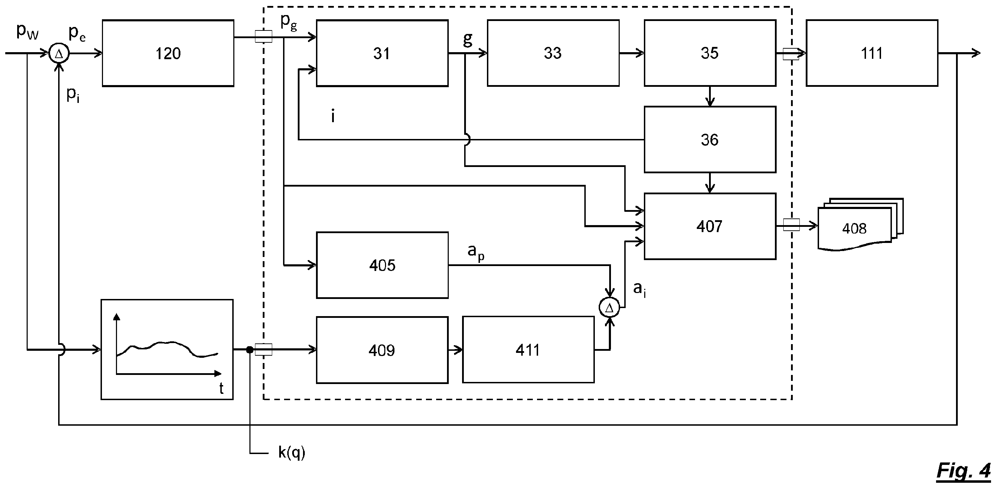

Das zweite Berechnungsmodul umfasst Konfigurationsdaten 406zur Festlegung eines Reglermodells für einen bestimmten Regler. Die Konfigurationsdaten 406 zur Anpassung des Modells werden Verwendet, das Reglermodell an einen bestimmten Regler, beispielsweise den dem Ventilstellgerät übergeordneten Prozessregler, anzupassen. Auf dem Speicher 404 können optional zusätzlich Prozesskontextdaten 409 hinterlegt sein, welche das Verhalten des dem Ventilstellgerät 1 übergeordneten Prozessreglers 120 charakterisieren. Der Prozessor 403 kann dazu eingerichtet sein, das zweite Berechnungsmodul 405 und/oder wenigstens eine Diagnoseroutine 407 unter Einbezug von Prozesskontextdaten 409 durchzuführen. Eine schematische Darstellung der in dem Stellungsregler 31 erfolgenden Stellungsregelung sowie der parallel dazu erfolgenden Regelungsinvertierung und gegebenenfalls Diagnose ist in einer ersten Ausführung in Figur 3 und in einer zweiten Ausführung in Figur 4 dargestellt.

Bezugnehmend auf Figur 1 sei klar, dass im Rahmen der mit dem Prozessregler 120 durchgeführten Prozessregelung als bekannte Prozessvariable ein Prozess-Ist-Signal $p_i$ und ein Prozess-Soll- Signal $p_W$ vorausgesetzt wird, auf deren Basis mittels der vorbestimmten Prozess-Regelungroutine als unbekannte, zu berechnende Prozessvariable ein Prozessstellsignal $p_g$ bestimmt wird. Diese Prozessregelungsroutine kann durch einen Modellregler repräsentiert werden. Das Prozessstellsignal $p_g$ wird dem untergeordneten Stellungsregler 1 übermittelt. Prozess-Soll-Signal $p_W$, Prozess-Ist-Signal $p_i$ und andere Prozesssignale sind dem Ventilstellungsregler 1 im Allgemeinen nicht bekannt.

Figur 3 zeigt eine Ausgestaltung eines Betriebsverfahrens, bei welchem eine Regelung und parallel dazu ein Diagnoseverfahren einschließlich einer Regelungsinvertierung und gegebenenfalls einer Diagnoseroutine durchgeführt wird. Das zweite Berechnungsmodul 405 kann Konfigurationsdaten 406 zur Anpassung des Modells umfassen. Das zweite Berechnungsmodul oder Invertiermodul 405 kann insbesondere dazu eingerichtet sein, die Inverse eines Modellreglers abzubilden, mit welchem die Prozessregelungsroutine des dem Ventilstellgerät 1 übergeordneten Prozessreglers 120 approximiert wird. Das zweite Berechnungsmodul 405 ist dazu eingerichtet, eine auf den übergeordneten Prozessreglern 120 bezogene Übertragungsfunktion im einem Spektralbereich, beispielsweise einem Laplace- oder Z-Raum, zu invertieren. Die Umsetzung der mit dem zweiten Berechnungsmodul 405 durchgeführte Regelungsinvertierung im Prozessor 403 der digitalen Stellungsreglerelektronik 400 dient dazu, auf Basis der von dem Prozessregler 120 ausgegeben Prozess-Stellgröße $p_g$, welche von dem Stellgerät 1 empfangen wird, die Eingangsdaten ($p_i$, $p_W$) des Prozessreglers 120 approximativ zu rekonstruieren. Das zweite Berechnungsmodul 405 ist dazu ausgelegt, dass durch den Prozessor 403 ausgehend von dem Prozessstellsignal $p_g$ als bekannte Variable, unter Zuhilfenahme von Prozesskontextdaten k, eine Rechnung durchgeführt wird, um ein als unbekannte Variable betrachtetes Approximations-Signal $a_P$ zu berechnen. Das Approximations-Signal $a_P$ korrespondert zu einem Prozesssignal, insbesondere der Prozess-Regeldifferenz $p_e$ oder dem Prozess-Ist-Signal $p_i$.

Die Prozesskontextdaten k bzw. 409 können bezogen sein auf das Prozess-Soll-Signal. Anhand der Prozess-Kontextdaten k kann bei der Regelungsmodellierung, insbesondere -invertierung, mit dem zweiten Berechnungsmodul 405 von einem zumindest zeitweise konstanten Prozess-Soll-Signals $p_w$ ausgegangen werden. Der Regelungsinvertierung können mittels der Prozesskontextdaten k mehrere verschiedene insbesondere konstante Prozess-Soll-Signale

$p_W$ zugrunde gelegt werden, die verschiedenen unterschiedlichen Zeitintervallen zugeordnet sind. Alternativ oder zusätzlich kann das zweite Berechnungsmodul 405 Prozesskontextdaten k verwenden, die einen zeitlichen Verlauf eines nicht-konstanten Prozess-Soll-Signals $p_W$ abbilden. Gemäß einer weiteren alternativen Option können die Prozesskontextdaten k dem zweiten Berechnungsmodul 405 Informationen über Signalverlauf-Charakteristika des Prozess-Soll-Signals $p_W$ vorgeben. Beispielsweise können Prozesskontextdaten k dem zweiten Berechnungsmodul 405 Informationen bereitstellen über einen beispielsweise linearen, rampenförmigen Verlauf des Prozess-Soll-Signals $p_W$. Die Prozesskontextdaten k können dem zweiten Berechnungsmodul Informationen hinsichtlich eines sinuskurvenförmigen Verlaufs des Prozess-Soll-Signals bereitstellen, beispielsweise dessen Frequenz, Amplitude, Offset in Amplitudenrichtung oder Offset in zeitlicher Dimension. Alternativ oder zusätzlich kann das zweite Berechnungsmodul Prozesskontextdaten berücksichtigen, welche ein sprungartiges Verhalten des Prozess-Soll-Signals beschreiben, beispielsweise dessen Amplitude, Frequenz, Sprungzeitpunkt oder dergleichen.

Das in Figur 3 abgebildete Betriebsverfahren bezieht sich auf einen Stellungsregler 31, der von dem übergeordneten Prozessregler 120 ausschließlich das Prozessstellsignal $p_g$ verarbeitet. Der Stellungsregler 31 gemäß der Figur 3 dargestellten Ausführung verarbeitet keine anderen direkt von der übergeordneten Reglerkaskade erhalten Signale als das Prozessstellsignal $p_g$. Insbesondere empfängt der Stellungsregler 31 aus der übergeordneten Prozessregelkaskade keine anderen Signale als das Prozessstellsignal $p_g$. Bei dem in Figur 3 dargestellten Verfahren werden dem Stellungsregler vorbestimmte Prozesskontextdaten k(t) insbesondere bezogen auf Zeitintervalle $t_2 - t_1$ bereitgestellt. Beispielsweise können Prozesskontextdaten k als Erfahrungswerte manuell über eine Benutzerschnittstelle eingegeben werden. Alternativ oder Zusätzlich können Prozesskontextdaten k in einer Fabrikeinstellung auf dem Speicher 404 der Stellungsreglerelektronik 400 hinterlegt werden, bevor das Ventilstellgerät 1 erstmalig in Betrieb genommen wird.

Figur 4 zeigt eine alternative Ausgestaltung eines Betriebsverfahrens, bei welchem eine Regelung und parallel dazu ein Diagnoseverfahren einschließlich einer Regelungsinvertierung und gegebenenfalls einer Diagnoseroutine durchgeführt wird. Das in Figur 4 schematisch dargestellte Betriebsverfahren unterscheidet sich von dem Verfahren gemäß Figur 3 im Wesentlichen nur durch die Bereitstellung bzw. den Erhalt von Prozesskontextdaten k. Das Ventilstellgerät 3 weist bei der Ausführung gemäß Figur 4 einen weiteren Eingang auf, um wenigstens ein Prozess-Soll-Signal $p_W$ der prozesstechnischen Anlage 100 zu empfangen. Das Prozess-Soll-Signal $p_W$ kann beispielsweise als Serie digitaler Prozess-Soll-Signale empfangen werden. Beispielsweise kann ein analoger oder digitaler Signaleingang des Ventilstellgerätes 1 als weiteren Eingangswert das Prozess-Soll-Signal $p_W$ empfangen, welches gleichsam in der prozesstechnischen Anlage 100 dem Prozessregler 120 für die Prozessregelung zugeführt wird. Alternativ ist es denkbar, dass der Prozessregler 120 dazu eingerichtet und signalübertragungsgemäß mit dem Ventilstellgerät 1 verbunden ist, zusätzlich das Prozess-Soll-Signal $p_W$ an den weiteren Eingang des Ventilstellgeräts 1 zu übermitteln. Der Prozess-Soll-Signal $p_g$ kann dem Ventilstellgerät 1 beispielsweise in digitaler Form als mehrere in sequenzieller Abfolge zu verarbeitende Prozess-Soll-Signale $p_W$ empfangen. Die Zeitreihe q von Prozess-Soll-Signalen kann von der digitalen Stellungsreglerelektronik 31 in dem Speicher 404 als Prozesskontextdaten k(q) abrufbar gespeichert werden. Gemäß einer vorteilhaften Ausführung würde den empfangenen Prozess-Soll-Daten der Zeitreihe q von Prozesskontextdaten je ein bestimmter Zeitpunkt oder Zeitintervall t zugeordnet. Als Zeitreihe q empfangene Prozess-Soll-Signale $p_W$ können korreliert zu einer Verzögerungsstrecke oder einem zeitlichen Offset als Prozesskontextdaten 409 gespeichert werden. Mithilfe eines zeitlichen Offsets bzw. Verzögerungsstrecke 411 kann eine Korrelation erfolgen von zeitlich vorgelagerten Prozess-Soll-Signalen $p_W$ und zeitlich nachgelagerten Prozessstellsignalen $p_g$, welche in der insbesondere invertierten Regelungsroutine, die mit Konfigurationsdaten 406 angepasst sein kann, gemäß dem zweiten Berechnungsmodul 405 miteinander zu verknüpfen sind. Beispielsweise kann der Regelungsinvertierung ein Prozessstellsignal $p_g$ in Kombination mit dem um eine Zykluszeit der digitalen Stellungsreglerelektronik 400 verschobenen Prozess-Soll-Signal $p_W$ zugrunde gelegt werden.

Bei einer digitalen Prozessregelung bzw. digitalen Stellgeräte-Regelung liegt in der Regel eine zeitliche Verzögerung zwischen dem Empfang eines (Prozess-) Sollwerts und der Ausgabe des zu diesem (Prozess-) Sollwert mittels der (Prozess-) Regelungsroutine zugeordneten (Prozess-) Stellsignals um insbesondere genau eine (Prozess-) Regler-Zykluszeit vor. Damit die Regelungsinvertierung auf Basis des Prozessstellwerts eine präzisere Approximation eines Prozess-Ist-Wertes oder eines Prozess-Regelwerts bestimmen kann, kann es hilfreich sein, zur Regelungsinvertierung einen Prozessstellwert und insbesondere genau einen Prozessregler-Zykluszeit älteren Prozess-Sollwert mit einzubeziehen. Alternativ kann insbesondere bei trägen Prozessen mit langsam, insbesondere kontinuierlich, veränderlichem Prozess-Soll-Signal, eine hinreichend genaue Approximation mittels Regelungsinvertierung ohne Verzögerungsstrecke durchgeführt werden.

Das zweite Berechnungsmodul 405 kann vorzugsweise die Inverse eines Prozessreglers 120 als gemäß einer PID-Regler-Struktur konfigurierten Modellregler abbilden. Beispielsweise kann das zweite Berechnungsmodul 405 eine Regelungsinvertierung insbesondere hinsichtlich eines als PID-Regler modelliertem Prozessreglers 120 umsetzen. Insbesondere kann das Invertiermodul 405 die Regelungsinvertierung durchführen auf einen als P-Regler, I-Regler, PD-Regler, PI-Regler oder PID-Regler modellierten Prozessregler 120. Ein in einer PID-Regler-Struktur modelliert abgebildeter Prozessregler 120 kann durch eine mathematische Funktion $G_{PID}$ beschrieben werden, welche ausgehend der bekannten Variablen Prozess-Soll-Signal $p_W$, Prozess-Ist-Signal $p_i$ und/oder Prozess-Regelabweichung $p_e$ als unbekannte Variable und Ausgangswert ein Prozessstellsignal $p_g$ bestimmt. In dem Modelliermodul oder Invertiermodul 405 kann die vorbekannte mathematische Regelungsfunktion dergestalt invertiert einer Berechnung zugrunde gelegt werden, dass das Prozessstellsignal $p_g$ als bekannte Variable gemeinsam mit einer als zumindest näherungsweise bekannte Variable betrachteten Prozess-Soll-Signal $p_W$ berücksichtigt wird, um einen Approximations-Signal $a_P$ zu bestimmen, das insbesondere zu einem Prozess-Ist-Wert $p_i$ oder einer Prozess-Regelabweichung $p_e$ korrespondiert. Die Prozessregelungsroutine eines Prozessreglers 120 in einer beispielsweise in Figur 0 skizzierten PID-Regler-Struktur lässt sich mathematisch im Laplace Raum L darstellen mittels der Gleichungen:

$$(4) \qquad X(s) = W(s) - G_{PID}^{-1}(s) \cdot Y_V(s)$$

$$(5) \qquad x(t) = L^{-1}\{X(s)\}$$

wobei

W(s)  die Laplace-Transformierte der den zeitlichen Verlauf des Prozesssollwerts $p_W$ beschreibenden reell-wertigen Funktion $p_w(t)$: $\mathbb{R} \to \mathbb{R}$ ;

X  einen Prozess-Istwert des diskreten oder zeitkontinuierlichen Prozess-Ist-Signals $p_i$;

$Y_V$  einen Prozess-Stellwert des diskreten oder zeitkontinuierlichen Prozessstellsignals $p_g$; und

$G_{PID}$  die Übertragungsfunktion des PID-Prozessreglers beschreibt und

s  eine Abhängigkeit von der Laplace Variablen darstellt.

Für die Übertragungsfunktion eines zeitkontinuierlichen PID-Reglers in paralleler Struktur mit realer D-Anteil Zeitkonstante $\tau$ im Laplace-Bereich mit der Proportionalverstärkung $K_P$, der Nachstellzeit $T_N$ und der Vorhaltzeit $T_V$ gilt:

$$(6) \qquad G_{PID}(s) = K_P \cdot (1 + \frac{1}{T_N} \cdot \frac{1}{s} + T_V \cdot \frac{s}{\tau*s+1})$$

Für einen Ventilstellungsregler kann es von Vorteil sei, die Gleichung (5) als Differenzengleichung umzustellen und in die nachfolgende Gleichung (6) einzusetzen und hinsichtlich eines diskreten Abtastschritts k zu betrachten:

$$(7) \qquad x(k) = w(k) - e(k) = w(k) - Z^{-1}\{\frac{Y_V(z)}{G_{PID}^{-1}(z)}\}$$

Für einen zeitdiskreten Regler kann die Übertragungsfunktion mittels der Tustin-Transformation gemäß Gleichung (7) bestimmt werden, wobei $T_C$ einer Zykluszeit des Prozessreglers entsprechend gewählt wird:

$$(8) \qquad s = \frac{2}{T_C} \cdot \frac{z-1}{z+1}$$

Hieraus ergibt sich

$$(9) \qquad G_{PID}^{-1} = \frac{1}{K_P} \cdot \frac{a_2 z^2 + a_1 z + a_0}{b_2 z^2 + b_1 z + b_0}$$

Wobei

$$(10) \qquad a_2 = 2T_N(T_C + 2\tau)$$

$$(11) \qquad a_1 = -8\tau T_N$$

$$(12) \qquad a_0 = -2T_N(T_C - 2\tau)$$

$$(13) \qquad b_2 = 2T_N(T_C + 2\tau) + T_C(T_C + 2\tau) + 4T_NT_V$$

$$(14) \qquad b_1 = -8\tau T_N + 2T_C^2 - 8T_NT_V$$

$$(15) \qquad b_0 = -2T_N(T_C - 2\tau) + T_C(T_C - 2\tau) + 4T_NT_V$$

Unter Verwendung der Stellungsreglerelektronik 400 kann mit dem Modellier- oder Invertiermodul 405 ausgehend vom Prozessstellsignal $p_g$ approximativ ein Approximations-Signal $a_P$ berechnet werden, das zur Prozess-Regeldifferenz $p_e$ oder zum Prozess-Ist-Signal $p_i$ korreliert.

Alternativ kann für manche Reglerstrukturen eine andere Berechnung ohne Verwendung eines Laplace-Raums direkt im Zeitintervall erfolgen. Beispielsweise kann ein Approximations-Signal korrespondierend zu einer Signalantwort eines PI-Reglers bestimmt werden. Die Invertierung einer zeit(t)-abhängigen Übertragungsfunktion $G_{PI}(t)$ eines PI-Prozessreglers ist bekannt. Das Reglermodell kann hinsichtlich des P-Faktors der Übertragungsfunktion $G_{PI}(t)$ mit einem proportionalen Rückrechenfaktor und hinsichtlich des I-Faktors mit einer Differenzierung nebst proportionalem Differenzierfaktor konfiguriert werden (nicht näher dargestellt). Mit einer derart invertierten Übertragungsfunktion eines zeitkontinuierlichen PI-Reglers $G_{PI}(t)$ kann ausgehend von einer von dem Prozessregler bereitgestellten Führungssignals ein Approximationssignal $a_P$ bestimmt werden.

Die Diagnoseroutine 409 kann dazu eingerichtet sein, eine oder mehrere Prozess-Regeldifferenzen abbildende Approximations-Signale $a_P$, beispielsweise einen Satz in zeitlicher Abfolge q ermittelter approximierter Regeldifferenzen $p_e$, zu analysieren. Die Diagnoseroutine 407 kann anhand dessen einen Diagnosecode 408 betreffend die stationäre Genauigkeit, Überschwinger, Stabilität, etc. der übergeordneten Prozessregelung bestimmen. Beispielsweise kann die Stabilität des Gesamtregelkreises umfassend Prozess- und Positionsregelung beurteilt werden.

Zum Beispielsweis kann die Anzahl von Überschwingern zur Diagnose berücksichtigt werden. Anhand der Anzahl und Amplitude von Überschwingern von der Diagnoseroutine 407 kann ein Diagnosecode 408 bezüglich der Qualität von Prozessführung und Stellungsreglung bestimmt werden. Beispielsweise kann mit einer Diagnoseroutine 407 als Diagnoseergebnis festgestellt werden, dass eine effiziente Prozessführung und Stellungsreglung vorliegen, falls wenige Überschwinger vorliegen. Ab einer Anzahl von Überschwingern oberhalb eines Schwellenwerts, kann mit der Diagnoseroutine 407 festgestellt werden, dass eine Verbesserung von Prozessführung und Stellungsreglung durch eine Anpassung der Regelparameter des Stellungsreglers 1 und/oder des Prozessreglers 120 empfohlen wird.

Die in der vorstehenden Beschreibung, den Figuren und Ansprüchen offenbarten Merkmale können sowohl einzeln als auch in beliebiger Kombination für die Realisierung der Erfindung in den verschiedenen Ausgestaltungen von Bedeutung sein.

Bezugszeichenliste

| 1 | Stellgerät |
|---|---|
| 31 | Stellungsregler |
| 33 | Aktuator |
| 35 | Stellventil |
| 100 | Prozesstechnische Anlage |
| 105 | Prozesssensor |
| 110 | Prozessfluidnutzer |
| 111 | Anlagenprozess |
| 120 | Prozessregler |
| 400 | Stellungsreglerelektronik |
| 401 | Regelungsmodul |
| 402 | Eingangsdaten |
| 403 | Prozessor |
| 404 | Speicher |
| 405 | Berechnungsmodul |
| 406 | Konfigurationsdaten |
| 407 | Diagnosemodul |
| 408 | Diagnosecode |
| 409 | Prozesskontextdaten |

| 411 | Verzögerungsstrecke |
|-----|---------------------|
| 420 | erster Signaleingang |
| 433 | Ausgang |
| 436 | zweiter Signaleingang |

| $a_P$ | Approximationssignal |
|-------|---------------------|
| g | Stellsignal |
| i | Stellungs-Istwert |
| k | Prozesskontextdaten |
| $p_d$ | Prozess-Regeldifferenz |
| $p_e$ | Prozess-Regeldifferenz |
| $p_g$ | Prozess-Soll-Signal |
| $p_i$ | Prozess-Ist-Signal |
| $p_W$ | Prozess-Soll-Signal |
| q | Zeitreihe |

**Patentansprüche**

1. Stellungsregler (31) für ein Ventilstellgerät (1) einer prozesstechnischen Anlage (100), umfassend:

    einen ersten Signaleingang für ein Führungssignal, wie ein Prozessstellsignal ($p_g$) von einem Prozessregler (120) der prozesstechnischen Anlage (100),
    einen zweiten Signaleingang für ein Stellungs-Ist-Signal (i) bezüglich eines Stellventils (35),
    wobei der Stellungsregler (31) zum Erzeugen einer Stellgröße (g) für einen Aktuator (33) zum Betätigen des Stellventils auf Basis des Führungssignals und des Stellungs-Ist-Signals (i) eingerichtet ist und einen Steuerausgang für die Stellgröße (g) umfasst,
    **dadurch gekennzeichnet, dass**
    der Stellungsregler (31) dazu eingerichtet ist, mittels eines konfigurierbaren, auf einen bestimmten Regler bezogenen Reglermodells ausgehend von dem Führungssignal und einer auf den Prozessregler (120) bezogenen Regelungsinvertierung ein Approximations-Signal ($a_p$) zu berechnen, wobei das Reglermodell derart konfiguriert ist, dass ein ausgehend von dem Approximations-Signal ($a_p$) durch den bestimmten Regler erzeugtes Signal zu dem Führungssignal korrespondiert, und dass der Stellungsregler (31) ferner dazu eingerichtet ist, wenigstens eine Diagnoseroutine unter Berücksichtigung des Approximations-Signals ($a_p$) durchzuführen.

2. Stellungsregler (31) nach Anspruch 1, ferner umfassend einen mit Prozesskontextdaten (k) belegten Speicher (9), und wobei der Stellungsregler (31) dazu eingerichtet ist, das Approximations-Signal ($a_p$) unter Berücksichtigung der Prozesskontextdaten (k) zu bestimmen und/oder dazu eingerichtet ist, die wenigstens eine Diagnoseroutine unter Berücksichtigung der Prozesskontextdaten (k) durchzuführen.

3. Stellungsregler (31) nach einem der vorstehenden Ansprüche, wobei der Stellungsregler (31) ferner dazu eingerichtet ist, die wenigstens eine Diagnoseroutine unter Berücksichtigung von zumindest einem Stellgerätesignal aus der Liste umfassend Stellgröße (g), Stellungs-Ist-Signal (i) und Prozessstellsignal ($p_g$) durchzuführen.

4. Stellungsregler (31) nach einem der vorstehenden Ansprüche, wobei der Stellungsregler (31) dazu eingerichtet ist, das Approximations-Signal ($a_p$) so zu bestimmen, dass das zu einem dem Ventilstellgerät (1) nicht bereitstehenden Prozess-Regeldifferenz-Signal ($p_e$) und/oder Prozess-Ist-Signal ($p_i$) des Prozessreglers (120) korrespondiert.

5. Ventilstellgerät (1) für eine prozesstechnische Anlage (100), das ein Stellventil (35) zum Einstellen einer Prozessfluidströmung, einen Aktuator (33) zum Betätigen des Stellventils (35) und einen Stellungsregler (31) nach einem der Ansprüche 1 bis 4 umfasst.

6. Diagnoseverfahren für ein Ventilstellgerät (1) in einer prozesstechnischen Anlage (100) mit einem Stellventil zum Einstellen einer Prozessfluidströmung, einem Aktuator zum Betätigen des Stellventils, einem Stellungsregler (31) zum Erzeugen einer Stellgröße für den Aktuator und einem das Ventilstellgerät (1) steuernden Prozessregler (120),

    wobei der Stellungsregler

einen ersten Signaleingang für ein Führungssignal, wie ein Prozessstellsignal ($p_g$), von einem Prozessregler (120) der prozesstechnischen Anlage (100) und
einen zweiten Signaleingang für ein Stellungs-Ist-Signal (i) bezüglich eines Stellventils (35) umfasst, wobei der Stellungsregler (31) zum Erzeugen einer Stellgröße (g) für den Aktuator (33) zum Betätigen des Stellventils auf Basis des Führungssignals und des Stellungs-Ist-Signals (i) eingerichtet ist und einen Steuerausgang für die Stellgröße (g) umfasst,

wobei dem Stellungsregler (31) vom Prozessregler (120) ein Prozessstellsignal ($p_g$) bereitgestellt wird, und wobei ein Reglermodell bezogen auf einen bestimmten Regler konfiguriert wird, **dadurch gekennzeichnet, dass** durch den Stellungsregler (31) ausgehend von dem Prozessstellsignal ($p_g$) und dem auf den Regler bezogenen Reglermodell sowie einer auf den Prozessregler (120) bezogenen Regelungsinvertierung ein Approximations-Signal ($a_p$) bestimmt wird, wobei das Reglermodell derart konfiguriert wird, , dass ein ausgehend von dem Approximations-Signal ($a_p$) durch den bestimmten Regler erzeugtes Signal zu dem Führungssignal korrespondiert, und wobei durch den Stellungsregler (31) wenigstens eine Diagnoseroutine unter Berücksichtigung des Approximations-Signals ($a_p$) durchgeführt wird.

7. Diagnoseverfahren nach Anspruch 6, wobei die Bestimmung des Approximations-Signals ($a_p$) und/oder die Diagnoseroutine ferner auf Prozesskontextdaten (k) basierend durchgeführt wird, die das Prozess-Soll-signal ($p_w$) charakterisieren.

8. Diagnoseverfahren nach Anspruch 7, wobei ein Zeitintervall bestimmt wird, auf den sich die Prozesskontextdaten (k) beziehen und/oder wobei die Prozesskontextdaten (k) eine Verzögerungsstrecke und/oder eine Signalformdefinition des Prozess-Soll-Signals ($p_w$) umfassen.

9. Diagnoseverfahren nach einem der Ansprüche 6 bis 8, wobei das Prozessstellsignal ($p_g$) gespeichert wird.

10. Diagnoseverfahren nach einem der Ansprüche 6 bis 9, wobei das Reglermodell auf Basis einer vorbestimmten zeitkontinuierlichen oder zeitdiskreten Regler-Struktur bestimmt wird.

11. Diagnoseverfahren nach Anspruch 10, wobei die Regelungsinvertierung dazu eingerichtet ist, mithilfe einer invertierten Übertragungsfunktion G eines Prozess-PID-Reglers eine Inverse im Z-Bereich über der Variablen z durch

$$G^{-1}_{approx}(z) := \frac{z^2 - z}{a \cdot z^2 + b \cdot z + c}$$ zu berechnen.

12. Diagnoseverfahren nach einem der Ansprüche 7 bis 11, wobei ein Vergleich des Diagnoseergebnisses mit einem vorbestimmten Soll-Verhalten des Ventilstellgeräts (1) durchgeführt wird.

13. Diagnoseverfahren nach Anspruch 12, wobei ein Diagnosecode erzeugt wird, falls beim Durchführen des Vergleichs eine Abweichung zwischen dem Diagnoseergebnis und dem vorbestimmten Soll-Verhalten festgestellt wird, und/oder wobei ein Diagnosecode unterdrückt und/oder gelöscht wird, falls beim Durchführen des Vergleichs keine Abweichung zwischen dem Diagnoseergebnis und dem vorbestimmten Soll-Verhalten festgestellt wird.

**Claims**

1. A positioner (31) for a valve control device (1) of a process plant (100), comprising:

a first signal input for a command signal, such as a process control signal ($p_g$) from a process controller (120) of the process plant (100),
a second signal input for an actual position signal (i) regarding a control valve (35), wherein the positioner (31) is configured to generate a control variable (g) for an actuator (33) to actuate the control valve based on the command signal and the actual position signal (i) and comprises a control output for the control variable (g),
**characterized in that**
the positioner (31) is configured to calculate an approximation signal ($a_p$) using a configurable controller model related to a specific controller based on the command signal and a control inversion related to the process controller (120), wherein the controller model is configured such that a signal generated by the specific controller based on the approximation signal ($a_p$) corresponds to the command signal, and that the positioner (31) is further configured to perform at least one diagnostic routine taking into account the approximation signal ($a_p$).

2. The positioner (31) according to claim 1, further comprising a memory (9) loaded with process context data (k), and wherein the positioner (31) is configured to determine the approximation signal ($a_p$) taking into account the process context data (k) and/or is configured to perform the at least one diagnostic routine taking into account the process context data (k).

3. The positioner (31) according to any of the preceding claims, wherein the positioner (31) is further configured to perform the at least one diagnostic routine taking into account at least one actuator device signal from the list comprising control variable (g), actual position signal (i), and process control signal ($p_g$).

4. The positioner (31) according to any of the preceding claims, wherein the positioner (31) is configured to determine the approximation signal ($a_p$) such that it corresponds to a process control difference signal ($p_e$) and/or actual process signal ($p_i$) of the process controller (120) that is not available to the valve control device (1).

5. A valve control device (1) for a process plant (100), comprising a control valve (35) for adjusting a process fluid flow, an actuator (33) for actuating the control valve (35), and a positioner (31) according to any of claims 1 to 4.

6. A diagnostic method for a valve control device (1) in a process plant (100) with a control valve for adjusting a process fluid flow, an actuator for actuating the control valve, a positioner (31) for generating a control variable for the actuator, and a process controller (120) controlling the valve control device (1),

   wherein the positioner comprises

   a first signal input for a command signal, such as a process control signal ($p_g$), from a process controller (120) of the process plant (100) and
   a second signal input for an actual position signal (i) regarding a control valve (35),
   wherein the positioner (31) is configured to generate a control variable (g) for the actuator (33) to actuate the control valve based on the command signal and the actual position signal (i) and comprises a control output for the control variable (g),

   wherein the positioner (31) is provided with a process control signal ($p_g$) by the process controller (120), and wherein a controller model related to a specific controller is configured,
   **characterized in that** the positioner (31) determines an approximation signal ($a_p$) based on the process control signal ($p_g$) and the controller model related to the controller as well as a control inversion related to the process controller (120), wherein the controller model is configured such that a signal generated by the specific controller based on the approximation signal ($a_p$) corresponds to the command signal, and wherein the positioner (31) performs at least one diagnostic routine taking into account the approximation signal ($a_p$).

7. The diagnostic method according to claim 6, wherein the determination of the approximation signal ($a_p$) and/or the diagnostic routine is further performed based on process context data (k) characterizing the process setpoint signal ($p_w$).

8. **The diagnostic** method according to claim 7, wherein a time interval is determined to which the process context data (k) relate and/or wherein the process context data (k) comprise a delay line and/or a signal form definition of the process setpoint signal ($p_w$).

9. The diagnostic method according to any of claims 6 to 8, wherein the process control signal ($p_g$) is stored.

10. The diagnostic method according to any of claims 6 to 9, wherein the controller model is determined based on a predetermined time-continuous or time-discrete controller structure.

11. The diagnostic method according to claim 10, wherein the control inversion is configured to calculate an inverse in the Z-domain over the variable z using an inverted transfer function G of a process PID controller by

$$G_{approx}^{-1}(z) := \frac{z^2 - z}{a \cdot z^2 + b \cdot z + c}.$$

12. The diagnostic method according to any of claims 7 to 11, wherein a comparison of the diagnostic result with a predetermined setpoint behavior of the valve control device (1) is performed.

13. The diagnostic method according to claim 12, wherein a diagnostic code is generated if a deviation between the diagnostic result and the predetermined setpoint behavior is detected during the comparison, and/or wherein a diagnostic code is suppressed and/or deleted if no deviation between the diagnostic result and the predetermined setpoint behavior is detected during the comparison.

**Revendications**

1. Positionneur (31) pour un appareil de régulation de vanne (1) d'une installation technique de processus (100), comprenant :

   une première entrée de signal pour un signal de guidage, comme un signal de réglage de processus ($p_g$) d'un régulateur de processus (120) de l'installation technique de processus (100),
   une deuxième entrée de signal pour un signal effectif de position (i) relative à une vanne de régulation (35), sachant que le positionneur (31) est agencé pour produire une valeur de réglage (g) pour un actionneur (33) pour actionner la vanne de régulation sur la base du signal de guidage et du signal effectif de position (i) et comprend une sortie de commande pour la valeur de réglage (g),
   **caractérisé en ce que**
   le positionneur (31) est agencé pour calculer un signal d'approximation ($a_p$) au moyen d'un modèle de régulateur configurable se référant à un régulateur déterminé en partant du signal de guidage et d'une inversion de régulation se référant au régulateur de processus (120), sachant que le modèle de régulateur est configuré de telle manière qu'un signal produit par le régulateur déterminé en partant du signal d'approximation ($a_p$) correspond au signal de guidage et **en ce que** le positionneur (31) est en plus agencé pour exécuter au moins un programme de diagnostic en tenant compte du signal d'approximation ($a_p$).

2. Positionneur (31) selon la revendication 1, comprenant en plus une mémoire (9) pourvue de données contextuelles de processus (k) et sachant que le positionner (31) est agencé pour déterminer le signal d'approximation ($a_p$) en tenant compte des données contextuelles de processus (k) et/ou est agencé pour exécuter au moins un programme de diagnostic en tenant compte des données contextuelles de processus (k).

3. Positionneur (31) selon l'une quelconque des revendications précédentes, sachant que le positionneur (31) est en plus agencé pour exécuter au moins un programme de diagnostic en tenant compte d'au moins un signal d'appareil de réglage issu de la liste comprenant la valeur de réglage (g), le signal effectif de position (i) et le signal de réglage de processus ($p_g$).

4. Positionneur (31) selon l'une quelconque des revendications précédentes, sachant que le positionneur (31) est agencé pour déterminer le signal d'approximation ($a_p$) de telle manière que celui-ci correspond à un signal de différence de régulation de processus ($p_e$) et/ou signal effectif de processus ($p_i$) du régulateur de processus (120) non disponible pour l'appareil de régulation de vanne (1).

5. Appareil de régulation de vanne (1) pour une installation technique de processus (100), qui comprend une vanne de régulation (35) pour régler un écoulement de fluide de processus, un actionneur (33) pour actionner la vanne de régulation (35) et un positionneur (31) selon l'une quelconque des revendications 1 à 4.

6. Procédé de diagnostic pour un appareil de régulation de vanne (1) dans une installation technique de processus (100) avec une vanne de régulation pour régler un écoulement de fluide de processus, un actionneur pour actionner la vanne de régulation et un positionneur (31) pour produire une valeur de réglage pour l'actionneur et un régulateur de processus (120) commandant l'appareil de régulation de vanne (1), sachant que le positionneur comprend

   une première entrée de signal pour un signal de guidage, comme un signal de de réglage de processus ($p_g$) d'un régulateur de processus (120) de l'installation technique de processus (100), et
   une deuxième entrée de signal pour un signal effectif de position (i) concernant une vanne de régulation (35), sachant que le positionneur (31) est agencé pour produire une valeur de réglage (g) pour l'actionneur (33) pour actionner la vanne de régulation sur la base du signal de guidage et du signal effectif de position (i) et comprend une sortie de commande pour la valeur de réglage (g),

sachant qu'un signal de réglage de processus ($p_g$) est fourni au positionneur (31) par le régulateur de processus (120), et

sachant qu'un modèle de régulateur est configuré en se référant à un régulateur déterminé,

**caractérisé en ce qu'**un signal d'approximation ($a_p$) est déterminé par le positionneur (31) en partant du signal de réglage de processus ($p_g$) et du modèle de régulateur se référant au régulateur ainsi que d'une inversion de régulation se référant au régulateur de processus (120), sachant que le modèle de régulateur est configuré de telle manière qu'un signal produit par le régulateur partant du signal d'approximation ($a_p$) déterminé correspond au signal de guidage et sachant qu'au moins un programme de diagnostic est effectué par le positionneur (31) en tenant compte du signal d'approximation ($a_p$).

7. Procédé de diagnostic selon la revendication 6, sachant que la détermination du signal d'approximation ($a_p$) et/ou le programme de diagnostic est exécuté en plus en se basant sur les données contextuelles de processus (k), qui caractérisent le signal théorique de processus ($p_w$).

8. Procédé de diagnostic selon la revendication 7, sachant qu'un intervalle de temps est déterminé auquel se réfèrent les données contextuelles de processus (k) et/ou sachant que les données contextuelles de processus (k) comprennent une distance de retard et/ou une définition de forme de signal du signal théorique de processus ($p_w$).

9. Procédé de diagnostic selon l'une quelconque des revendications 6 à 8, sachant que le signal de réglage de processus ($p_g$) est mémorisé.

10. Procédé de diagnostic selon l'une quelconque des revendications 6 à 9, sachant que le modèle de régulateur est déterminé sur la base d'une structure de régulateur prédéterminée continue dans le temps ou discrète en temps.

11. Procédé de diagnostic selon la revendication 10, sachant que l'inversion de régulation est agencée pour calculer à l'aide d'une fonction de transmission inversée **G** d'un régulateur PID [**P**roportionnel, **I**ntégral, **D**érivé] un inverse dans

$$G_{approx}^{-1}(z) := \frac{z^2 - z}{a \cdot z^2 + b \cdot z + c}$$

une zone Z par le biais des variables z par                                   .

12. Procédé de diagnostic selon l'une quelconque des revendications 7 à 11, sachant qu'une comparaison du résultat de diagnostic à un comportement théorique prédéterminé de l'appareil de réglage de vanne (1) est effectuée.

13. Procédé de diagnostic selon la revendication 12, sachant qu'un code de diagnostic est produit au cas où lors de l'exécution de la comparaison, un écart est constaté entre le résultat de diagnostic et le comportement théorique prédéterminé, et/ou sachant qu'un code de diagnostic est supprimé et/ou annulé, au cas où lors de l'exécution de la comparaison aucun écart n'est constaté entre le résultat de diagnostic et le comportement théorique prédéterminé.

Fig. 0

EP 4 182 762 B1

Fig.1

EP 4 182 762 B1

*Fig. 2*

Fig. 3

Fig. 4

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1451649 B1
- US 7085610 B2
- EP 1599712 A0
- WO 2020049214 A1
- WO 2015012832 A1
- DE 102017124293 A1
- DE 102010015647 B4
- DE 102006003750 B4
- DE 102005024674 B4
- DE 102005024686 B4
- DE 19723650 B9